# EUROPEAN PATENT APPLICATION

(11) **EP 4 797 548 A1**
(43) Date of publication of application: **26.08.2026**
(21) Application number: 24880065.8
(22) Date of filing: 14.10.2024
(51) Int. Cl.: H04B 1/40, H04B 1/62, H01Q 21/26, G06N 20/00, H04B 1/04

(54) **ELECTRONIC DEVICE AND METHOD FOR DIGITAL PREDISTORTION IN WIRELESS COMMUNICATION SYSTEM**

(30) Priority: 20.10.2023 KR 20230141581; 07.11.2023 KR 20230153166
(71) Applicant: Samsung Electronics Co., Ltd., Suwon-si, Gyeonggi-do 16677 (KR)
(72) Inventor: AOKI, Yuichi, Suwon-si Gyeonggi-do 16677 (KR); KANG, Heedo, Suwon-si Gyeonggi-do 16677 (KR); KIM, Yonghoon, Suwon-si Gyeonggi-do 16677 (KR); KIM, Wonki, Suwon-si Gyeonggi-do 16677 (KR); MIN, Kihong, Suwon-si Gyeonggi-do 16677 (KR)
(74) Representative: Gulde & Partner
(86) International application number: PCT/KR2024/015538
(87) International publication number: WO 2025/084728

(57) **Abstract**

This electronic device may comprise: a DPD circuit; a first RF transmission/reception circuit for a first polarization; a second RF transmission/reception circuit for a second polarization; a plurality of antennas including a first antenna and second antennas; and a control circuit. The first RF transmission/reception circuit may include a plurality of first RF processing circuits for the plurality of antennas. The second RF transmission/reception circuit may include a plurality of second RF processing circuits for the plurality of antennas. The control circuit may be configured to transmit a transmission signal through a transmission path connected to the first antenna among the plurality of first RF processing circuits. The control circuit may be configured to obtain a first reception signal corresponding to the transmission signal through a reception path connected to the first antenna among the plurality of second RF processing circuits.

## Description

### [Technical Field]

The present disclosure relates to a wireless communication system. More specifically, the present disclosure relates to an electronic device and a method for digital predistortion (DPD) in the wireless communication system.

### [Background Art]

In a wireless communication system, a digitally modulated signal is amplified through a radio frequency (RF) power amplifier. In order for distortion-free transmission of a signal, a high linear characteristic of a power amplifier is required. In order to provide a high linearity of the power amplifier, digital predistortion (DPD) for changing an input signal such that an output of the power amplifier is close to an ideal state is used.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device is provided. The electronic device may comprise a digital pre-distortion (DPD) circuit, a first radio frequency (RF) transceiver circuit for a first polarization, a second RF transceiver circuit for a second polarization, a plurality of antennas including a first antenna and a second antenna, and a control circuit. The first RF transceiver circuit may include a plurality of first RF processing circuits for the plurality of antennas. The second RF transceiver circuit may include a plurality of second RF processing circuits for the plurality of antennas. The control circuit may be configured to transmit a transmission signal through a transmission path connected to the first antenna among the plurality of first RF processing circuits. The control circuit may be configured to obtain a first reception signal corresponding to the transmission signal through a reception path connected to the first antenna among the plurality of second RF processing circuits. The control circuit may be configured to obtain a second reception signal corresponding to the transmission signal through a reception path connected to the second antenna among the plurality of second RF processing circuits. The control circuit may be configured to set the DPD circuit based on the transmission signal, the first reception signal, and the second reception signal.

In embodiments, a method performed by an electronic device is provided. The method may comprise transmitting a transmission signal through a transmission path connected to a first antenna among a plurality of first radio frequency (RF) processing circuits for a plurality of antennas. The method may comprise obtaining a first reception signal corresponding to the transmission signal through a reception path connected to the first antenna among a plurality of second RF processing circuits for the plurality of antennas. The method may comprise obtaining a second reception signal corresponding to the transmission signal through a reception path connected to a second antenna among the plurality of second RF processing circuits. The method may comprise setting a digital pre-distortion (DPD) circuit based on the transmission signal, the first reception signal, and the second reception signal. The plurality of first RF processing circuits may be used for signals for a first polarization. The plurality of second RF processing circuits may be used for signals for a second polarization.

### [Description of the Drawings]

FIG. 1A illustrates a wireless communication system.
FIG. 1B illustrates an example of network entities of an electronic device.
FIG. 2 is a diagram for describing a principle of digital predistortion (DPD).
FIG. 3 illustrates an example of a transmission circuit including a digital predistortion (DPD) circuit.
FIG. 4A illustrates an example of an electronic device including a DPD circuit.
FIG. 4B illustrates an example of an RF processing circuit.
FIG. 5 illustrates an example of an RF transceiver circuit of an electronic device.
FIG. 6A to FIG. 6D illustrate an example of reception signals.
FIG. 7 illustrates an example of a distribution of reception signals.
FIG. 8A, FIG. 8B, and FIG. 8C illustrate an example of machine learning using reception signals.
FIG. 9A illustrates operations of an electronic device for setting a DPD circuit through machine learning.
FIG. 9B illustrates examples of a performance of a DPD circuit.
FIG. 10A illustrates an example of components of an electronic device.
FIG. 10B illustrates an example of an array antenna.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a network entity (e.g., electronic device, unit, RU, DU, CU, module, communication module, RF unit, RF module, RF circuit), a term referring to a component of a device, and a term referring to a part of an electronic device (e.g., substrate, print circuit board (PCB), flexible PCB (FPCB), module, antenna, antenna element, circuit, processor, chip, component, device), and a term referring to a circuit (e.g., PCB, FPCB, signal line, feeding line, data line, RF signal line, antenna line, RF path, RF module, RF circuit, splitter, divider, coupler, combiner), and the like, that are used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

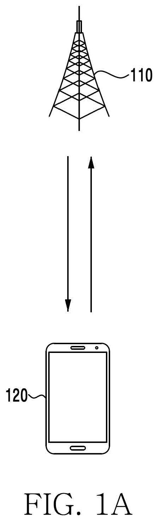

FIG. 1A illustrates a wireless communication system.

Referring to FIG. 1A, FIG. 1A exemplifies a base station 110 and a terminal 120, as a portion of nodes using a wireless channel in the wireless communication system. FIG. 1A illustrates only one base station, however, the wireless communication system may further include another base station identical or similar to the base station 110.

The base station 110 is a network infrastructure that provides a wireless access to the terminal 120. The base station 110 has a coverage defined based on a distance at which a signal may be transmitted. In addition to the base station, the base station 110 may be referred to as an access point (AP), an eNodeB (eNB), a 5th generation node (5G node), a next generation nodeB (gNB), a wireless point, a transmission/reception point (TRP), or another term having an equivalent technical meaning thereto.

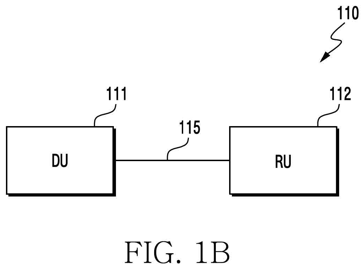

The terminal 120 is a device used by a user, and performs communication with the base station 110 through the wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through the wireless channel. At this time, a link between the terminal 120 and another terminal (a device-to-device link (D2D)) is referred to as a sidelink, and the sidelink may be used interchangeably with a PC5 interface. In other some embodiments, the terminal 120 may be operated without involvement of the user. According to an embodiment, the terminal 120 is a device performing a machine type communication (MTC), and may not be carried by the user. In addition, according to an embodiment, the terminal 120 may be a narrowband (NB)-internet of things (IoT) device. In addition to the terminal, the terminal 120 may be referred to as a user equipment (UE), a customer premises equipment (CPE), a mobile station, a subscriber station, a remote terminal, a wireless terminal, an electronic device, a user device, or another term having an equivalent technical meaning thereto.

The base station 110 may transmit a signal to the terminal 120. The terminal 120 may receive a signal from the base station 110. The terminal 120 may transmit a signal to the base station 110. The base station 110 may receive a signal from the terminal 120. For example, the base station 110 and the terminal 120 may transmit and receive a wireless signal in a relatively low frequency band (e.g., a frequency range 1 (FR 1) of NR). In addition, for example, the base station 110 and the terminal 120 may transmit and receive a wireless signal in a relatively high frequency band (e.g., FR 2 (or, FR 2-1, FR 2-2, FR 2-3), FR 3 of the NR, or a mmWave band (e.g., 28 GHz, 30 GHz, 38 GHz, or 60 GHz)). For improvement of a channel gain, the base station 110 and the terminal 120 may perform beamforming. Herein, the beamforming may include transmission beamforming and reception beamforming. The base station 110 and the terminal 120 may provide a directivity to a transmission signal or a reception signal. For this, the base station 110 and the terminal 120 may select serving beams through a beam search or a beam management procedure. After the serving beams are selected, a subsequent communication may be performed through a resource in a QCL relation with a resource transmitting the serving beams.

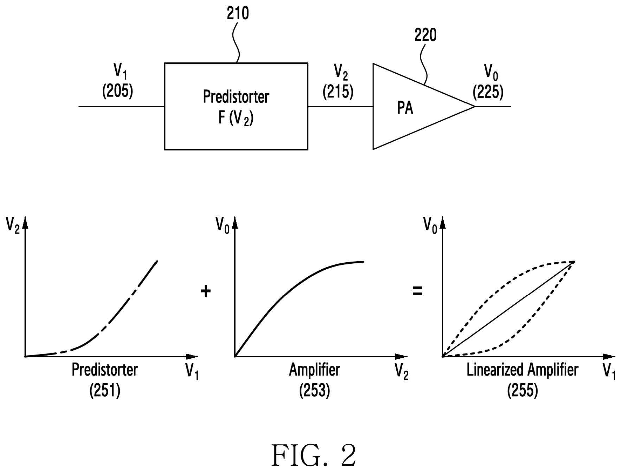

Conventionally, in a communication system in which a cell radius of a base station is relatively large, each base station was installed such that each base station includes functions of a digital processing unit (or a distributed unit (DU)) and an RF processing unit (or a radio unit (RU)). However, as a high frequency band is used in a communication system of a 4th generation (4G) and/or thereafter (e.g., 5G), and a cell coverage of a base station becomes small, the number of base stations for covering a specific area has increased. A burden of installation cost of an operator for installing base stations has also increased. In order to minimize the installation cost of the base station, a structure in which one or more RUs are connected to one DU through a wired network as the DU and the RU of the base station are separated and the one or more RUs distributed geographically are disposed to cover the specific area has been proposed. Hereinafter, through FIG. 2A, a disposition structure and expansion examples of the base station according to various embodiments of the present disclosure are described.

FIG. 1B illustrates an example of network entities of an electronic device. For example, the electronic device may include the base station 110 of FIG. 1. The base station 110 may be separated into two or more entities through a fronthaul. The fronthaul refers to an interface between a DU and an RU between a radio access network and a core network, unlike a backhaul. FIG. 1B illustrates an example of a fronthaul structure between the DU and one RU, however, this is only for convenience of description and the present disclosure is not limited thereto. In other words, an embodiment of the present disclosure may be applied to a fronthaul structure between one DU and a plurality of RUs. For example, an embodiment of the present disclosure may be applied to a fronthaul structure between one DU and two RUs. In addition, an embodiment of the present disclosure may be applied to a fronthaul structure between one DU and three RUs.

Referring to FIG. 1B, the base station 110 may include a DU 111 and an RU 112. A fronthaul 115 between the DU 111 and the RU 112 may be operated through an Fx interface. For operation of the fronthaul 115, for example, an interface such as a common public radio interface (CPRI), an enhanced common public radio interface (eCPRI), and a radio over ethernet (ROE) may be used.

As communication technology develops, mobile data traffic increases, and accordingly, a bandwidth requirement required in a fronthaul between a digital unit and a radio unit has greatly increased. In a deployment such as a centralized/cloud radio access network (C-RAN), the DU 111 performs functions for a packet data convergence protocol (PDCP), a radio link control (RLC), a media access control (MAC), and a physical (PHY), and the RU 112 may be implemented to further perform functions for the PHY layer in addition to a radio frequency (RF) function.

The DU 111 may be in charge of a higher layer function of a radio network. For example, the DU 111 may perform a function of the MAC layer and a portion of the PHY layer. Herein, the portion of the PHY layer refers to being performed at a higher stage among functions of the PHY layer, and, as an example, may include channel encoding (or channel decoding), scrambling (or descrambling), modulation (or demodulation), and layer mapping (or layer demapping). According to an embodiment, in a case that the DU 111 follows an O-RAN standard, it may be referred to as an O-DU (O-RAN DU). The DU 111 may be replaced and represented as a first network entity for a base station (e.g., a gNB) in embodiments of the present disclosure as necessary.

The RU 112 may be in charge of a lower layer function of the radio network. For example, the RU 112 may perform a portion of the PHY layer and an RF function. Herein, the portion of the PHY layer refers to being performed at a relatively lower stage than the DU 111 among the functions of the PHY layer, and, as an example, may include iFFT conversion (or FFT conversion), CP insertion (CP removal), and digital beamforming. The RU 112 may be referred to as an access unit (AU), an access point (AP), a transmission/reception point (TRP), a remote radio head (RRH), a radio unit (RU), or another term having an equivalent technical meaning thereto. According to an embodiment, in a case that the RU 112 follows the O-RAN standard, it may be referred to as an O-RU (O-RAN RU). The RU 112 may be replaced and represented as a second network entity for the base station (e.g., the gNB) in embodiments of the present disclosure as necessary. According to an embodiment, a digital predistortion (DPD) circuit and a processing circuit for the DPD circuit may be included in the RU 112 of the base station 110 having a distributed disposition.

FIG. 2 is a diagram for describing a principle of digital predistortion (DPD). Predistortion may be performed in a DPD circuit of an electronic device. The DPD circuit may compensate for a distortion component according to a nonlinear characteristic of a power amplifier (PA), based on a comparison of an input signal and an output signal of the power amplifier. As an input modulation signal distorted through the DPD circuit is input to the power amplifier, a finally modulated signal may be linearly amplified.

Referring to FIG. 2, a DPD circuit 210 may output a DPD output signal 215 based on an input signal 205. The input signal 205 may be predistorted into the DPD output signal 215 through the DPD circuit 210. A power amplifier 220 may output an amplifier output signal 225 based on the DPD output signal 215. The DPD output signal 215 may be input to the power amplifier 220. According to a nonlinear characteristic of the power amplifier 220, the DPD output signal 215 is distorted. Due to the distortion caused by the power amplifier 220, the amplifier output signal 225 is output. Although not illustrated in FIG. 2, an analog conversion may be performed on the DPD output signal 215 through a DAC, and an up-conversion may be performed on the DPD output signal 215 through a mixer.

A graph 251 indicates a relationship between a size of the input signal 205 and a size of the DPD output signal 215. A graph 253 indicates a relationship between a size of the DPD output signal 215 and a size of the amplifier output signal 225. A graph 255 indicates a relationship between the size of the input signal 205 and the size of the amplifier output signal 225. Referring to the graph 255, through predistortion of the DPD circuit 210, an output (e.g., the amplifier output signal 225) with respect to an input (e.g., the input signal 205) may be linear.

The power amplifier 220 may include a transistor. In a case that a modulation signal of a wireless communication system is used as a wide bandwidth signal having a wide bandwidth, a distortion component of the power amplifier 220 may include not only a distortion component according to a nonlinear characteristic but also a distortion component due to a memory effect. The memory effect means that a signal nonlinearly generated in the past in time affects a current nonlinear characteristic. That is, the power amplifier 220 is a nonlinear system using memory. The memory effect may be caused by thermal constants of active devices or components of a biasing network having a frequency dependent operation. As described above, the distortion component due to the memory effect increases in proportion to a bandwidth of a signal. The DPD circuit may be configured to compensate for a nonlinear distortion component of the power amplifier and a distortion component due to the memory effect.

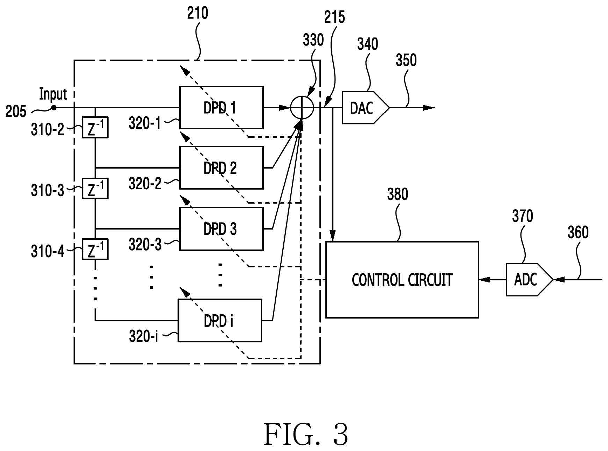

FIG. 3 illustrates an example of a transmission circuit including a DPD circuit (e.g., a DPD circuit 210). The DPD circuit may compensate for a memory effect. The memory effect means that a signal generated in the past in time affects a current nonlinear characteristic. The DPD circuit illustrated in FIG. 3 is for describing an example of a DPD circuit. Accordingly, a structure illustrated in FIG. 3 is not construed as limiting a structure of a DPD circuit included in an electronic device (e.g., an RU 112) of the present disclosure.

Referring to FIG. 3, the DPD circuit 210 may use a finite impulse response (FIR) filter structure. For implementation of predistortion, a polynomial FIR filter may be used. The DPD circuit 210 may include components according to a structure of a FIR filter. The DPD circuit 210 may include a plurality of DPD units 320, one or more delay elements 310, and a combiner 330. The plurality of DPD units 320 may include a first DPD unit 320-1, a second DPD unit 320-2, a third DPD unit 320-3, ..., and an i-th DPD unit 320-i. In each DPD unit, a function operation (e.g., multiplication of a coefficient) for a delayed signal may be performed. i may correspond to a length of the FIR filter. The one or more delay elements may include a second delay element 310-2 connected to the second DPD unit 320-2, a third delay element 310-3 connected to the third DPD unit 320-3, a fourth delay element 310-4 connected to the fourth DPD unit 320-4, ..., and a delay element combined with an N-th DPD unit. An output of each DPD unit of the plurality of DPD units 320 may be provided to the combiner 330.

The combiner 330 may generate a DPD output signal 215 by combining outputs of the plurality of DPD units 320. The DPD output signal 215 may be transmitted from the combiner 330 to a DAC 340. According to an embodiment, the DPD output signal 215 may be provided to a control circuit 380. The control circuit 380 may indicate at least a portion of a processing circuit performed by a processor (e.g., a baseband processor, a modem, or a SoC).

The DAC 340 may convert the DPD output signal 215 into an analog signal 350. The DAC 340 may deliver the converted analog signal 350 to a transmission path (e.g., a path including a power amplifier (PA) 220). Through the power amplifier 220 of the transmission path, the analog signal 350 may be amplified. The amplified signal (e.g., an amplifier output signal 225) may be delivered to an antenna (not illustrated). The antenna may radiate the amplified signal. Meanwhile, the power amplifier 220 may include a transistor. The transistor is an active device and has an inherently nonlinear characteristic. Accordingly, the power amplifier 220 may output a nonlinear amplifier output signal with respect to an input signal. The amplifier output signal is linearly proportional to the input signal in a partial region with respect to a size of the input signal. However, in another partial region with respect to the size of the input signal, the power amplifier 220 provides an output not proportional to the input signal. In particular, as a bandwidth of the input signal of the power amplifier 220 is wider, a memory effect due to a second harmonic component of the input signal may frequently occur. For example, a harmonic impedance at an output end of the power amplifier 220 may generate a voltage component. The voltage component may re-input to the power amplifier 220 by being reflected by a bias line. Accordingly, the memory effect may occur through an interaction between a current input signal and a re-input signal. In order to reduce a performance delay due to the memory effect, the DPD circuit 210 and the control circuit 380 for control of the DPD circuit 210 may be used.

The control circuit 380 may obtain an input signal (e.g., the DPD output signal 215) to the DAC 340. The input signal may be converted into the analog signal 350 through the DAC 340. The analog signal 350 may be amplified. The amplified signal may be radiated through an RF transmission path. The radiated signal may be obtained as a reception signal 360 through an RF reception path. The reception signal 360 may be input to an ADC 370. The control circuit 380 may obtain an output signal of the ADC 370. The output signal of the ADC 370 may correspond to an output signal of the power amplifier 220.

The control circuit 380 may control the DPD circuit 210 for predistorting a nonlinear characteristic of the power amplifier 220. For example, the control circuit 380 may determine control parameters for predistorting the nonlinear characteristic of the power amplifier 220 by comparing an input signal of the power amplifier 220 and an output signal of the power amplifier 220. Determining the control parameters may be referred to as DPD modeling. According to an embodiment, the control circuit 380 may determine coefficients (hereinafter, DPD coefficients) to be applied to each DPD unit of the DPD circuit 210. The control circuit 380 may determine DPD coefficients corresponding to the DPD units. The control circuit 380 may set the DPD circuit 210 such that the DPD circuit 210 operates according to the determined DPD coefficients. Operations corresponding to the control circuit 380 may be performed by a processor (e.g., a baseband processor). For example, the processor may generate a control signal for controlling the DPD circuit 210. The processor may apply the control signal to the DPD circuit 210.

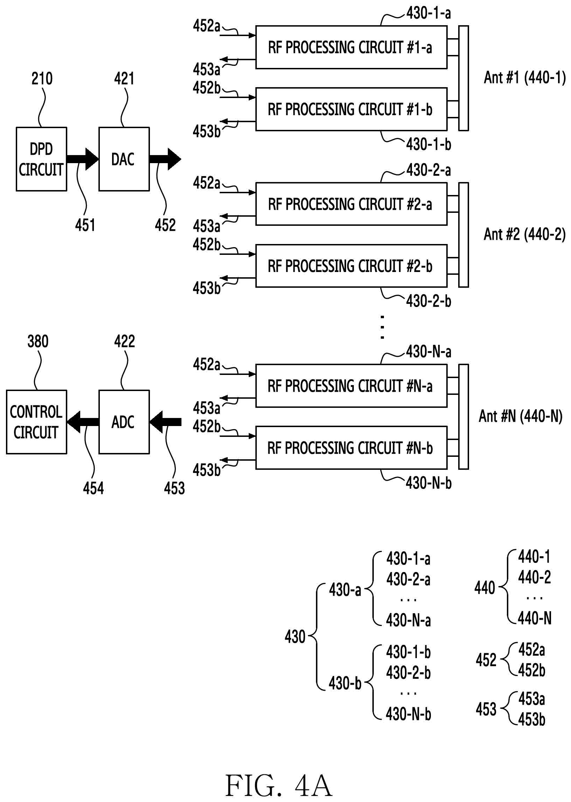

FIG. 4A illustrates an example of an electronic device (e.g., a base station 110, or an RU 112) including a DPD circuit (e.g., a DPD circuit 210). In addition, terms such as "...unit", "...device", "...object", and "...structure" used below may mean at least one shape structure or may mean a unit for processing a function.

Referring to FIG. 4A, an electronic device 101 may include the DPD circuit 210 and a DAC 421. The DPD circuit 210 may output a digital transmission signal 451. The DAC 421 may convert the digital transmission signal 451 into an RF transmission signal 452.

The electronic device 101 may include a plurality of antennas 440. Each antenna (e.g., a radiator) of the plurality of antennas 440 may correspond to an antenna element of an array antenna. Each antenna may have a plurality of ports. For example, the plurality of ports may include a first port and a second port. The first port may be configured for a signal of a first polarization. The second port may be configured for a signal of a second polarization. The first polarization and the second polarization may be substantially perpendicular. For example, the first polarization may be a polarization of 90 degrees, and the second polarization may be a polarization of 0 degrees. For another example, the first polarization may be a polarization of +45 degrees, and the second polarization may be a polarization of -45 degrees.

The electronic device 101 may include an RF transceiver circuit 430. The RF transceiver circuit 430 may include a first RF transceiver circuit 430-a for the first port and a second RF transceiver circuit 430-b for the second port. For example, the RF transceiver circuit 430 may include the first RF transceiver circuit 430-a for the first polarization and the second RF transceiver circuit 430-b for the second polarization. The first RF transceiver circuit 430-a may include first RF processing circuits for the plurality of antennas 440. The plurality of antennas 440 may respectively correspond to the first RF processing circuits. For example, among the plurality of antennas 440, an antenna 440-n may be connected to one of the first RF processing circuits. As an example, a first antenna 440-1 may be connected to an RF processing circuit #1-a 430-1-a among the first RF processing circuits. A second antenna 440-2 may be connected to an RF processing circuit #2-a 430-2-a among the first RF processing circuits. An n-th antenna 440-n may be connected to an RF processing circuit #n-a 430-n-a among the first RF processing circuits. The second RF transceiver circuit 430-b may include second RF processing circuits for the plurality of antennas 440. The plurality of antennas 440 may respectively correspond to the second RF processing circuits. For example, among the plurality of antennas 440, the antenna 440-n may be connected to one of the second RF processing circuits. As an example, the first antenna 440-1 may be connected to an RF processing circuit #1-b 430-1-b among the second RF processing circuits. The second antenna 440-2 may be connected to an RF processing circuit #2-b 430-2-b among the second RF processing circuits. The n-th antenna 440-n may be connected to an RF processing circuit #n-b 430-n-b among the second RF processing circuits.

The RF transmission signal 452 converted through the DAC 421 may be provided to each RF processing circuit. For example, the RF transmission signal 452 may include a first RF transmission signal 452a of the first polarization. The first RF transmission signal 452a may be transmitted to each RF processing circuit of the first RF transceiver circuit 430-a. For example, the RF transmission signal 452 may include a second RF transmission signal 452b of the second polarization. The second RF transmission signal 452b may be transmitted to each RF processing circuit of the second RF transceiver circuit 430-b. Each RF processing circuit may include a transmission path and a reception path. Similar to the transmission path, each RF processing circuit may process a signal received through an antenna. For example, the antenna may receive a signal of the first polarization. Each RF processing circuit of the first RF transceiver circuit 430-a may output a first RF reception signal 453a by processing the signal of the first polarization. The antenna may receive a signal of the second polarization. Each RF processing circuit of the second RF transceiver circuit 430-b may output a second RF reception signal 453b by processing the signal of the second polarization. The electronic device 101 may include a control circuit 380 and an ADC 422. The ADC 422 may convert an RF reception signal 453 into a digital reception signal 454. The control circuit 380 may obtain the digital reception signal 454.

The control circuit 380 may be configured to control the DPD circuit 210. The control circuit 380 may determine control parameters for predistorting a nonlinear characteristic of a power amplifier through a comparison of the digital transmission signal 451 and the digital reception signal 454. The control circuit 380 may set the DPD circuit 210 according to the determined control parameters. For example, the control circuit 380 may be configured to set DPD coefficients. The control circuit 380 may determine DPD coefficients corresponding to DPD units of the DPD circuit 210. The control circuit 380 may control the DPD circuit 210 to operate according to the determined DPD coefficients. Operations corresponding to the control circuit 380 may be performed by a processor (e.g., a baseband processor, an RU modem, or a system on chip (SoC)).

The DPD circuit 210 may be used to compensate for predistortion occurring in a power amplifier of the transmission path. The control circuit 380 for the DPD circuit 210 may control the DPD circuit 210 according to a degree of distortion. For example, in order to identify the degree of distortion, a method of receiving a signal radiated through the transmission path through an external receiver may be considered. A receiver provided separately from the electronic device may receive signals, and the received signals may be input to the control circuit 380. However, the method may cause a cost due to installation and a waste of resources due to feedback. For another example, a method of obtaining a signal passing through the transmission path from a feedback path (e.g., a connection using a coupler of the antenna) connected to the antenna may be considered. However, as a frequency increases, since a path loss due to the feedback path increases, a performance of DPD control may be degraded.

The electronic device (e.g., the control circuit 380) according to embodiments of the present disclosure may control the DPD circuit 210 by using reception signals obtained through the reception path connected to the antenna, in order to alleviate the above-described problem. For example, when the signal of the first polarization is radiated, RF processing circuits for the second polarization may be used as reception paths. The control circuit 380 may receive the radiated signal through antennas. The control circuit 380 may obtain reception signals through reception paths connected to the antennas. It is assumed that RF processing circuits for the first polarization and the RF processing circuits for the second polarization are respectively connected to different antennas. An antenna connected to a transmission path of the signal of the first polarization (hereinafter, a transmission antenna) and an antenna connected to a reception path (hereinafter, a reception antenna) may be physically spaced apart by a predetermined distance or more. As a separation distance between the transmission antenna and the reception antenna increases, a difference between an actual transmission signal and the reception signals obtained through the reception paths may increase. Accordingly, the electronic device according to embodiments of the present disclosure may include a front-end structure in which each antenna is connected to an RF processing circuit (e.g., one of the RF processing circuits of the first RF transceiver circuit 430-a) for the first polarization and an RF processing circuit (e.g., one of the RF processing circuits of the second RF transceiver circuit 430-b) for the second polarization. In other words, a transmission path of the RF processing circuit for the first polarization and a reception path of the RF processing circuit for the second polarization may share a radiator. Hereinafter, in the present disclosure, an expression of a reception path is used as a path through which reception signals for control of a DPD circuit are transmitted, but other expressions may be used. In addition to the reception path, a loop path, a loopback path, a loopback reception path, a feedback path, a feedback reception path, a test path, a feedback loop, a reception loop, and/or an equivalent technical term may be used. The reception path is not configured as a separate individual path for signal transmission, but indicates paths of RF processing circuits connected to the antenna. As a plurality of RF processing circuits are connected to each antenna to support dual polarization, reception paths of an RF processing circuit supporting a polarization different from a polarization of the transmission signal may be used as a path of reception signals for control of the DPD circuit.

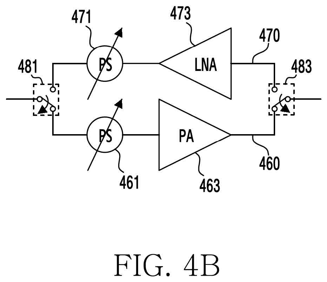

FIG. 4B illustrates an example of an RF processing circuit. A description of FIG. 4B may be applied to at least a portion of RF processing circuits of the first RF transceiver circuit 430-a and RF processing circuits of the second RF transceiver circuit 430-b.

Referring to FIG. 4B, the RF processing circuit may include a transmission path 460 and a reception path 470. The transmission path 460 may include a phase shifter 461 and a power amplifier 463. As a non-limiting example, the phase shifter 461 may be omitted from the transmission path 460 or may be disposed at another position. The reception path 470 may include a phase shifter 471 and a low noise amplifier 473. As a non-limiting example, the phase shifter 471 may be omitted from the reception path 470 or may be disposed at another position.

The RF processing circuit may be used for transmission of a signal or reception of a signal. The RF processing circuit may include switching circuits (e.g., RF switches). For example, the switching circuits may include a first switching circuit 481 and a second switching circuit 483. The first switching circuit 481 may be configured to selectively connect an input end of the RF processing circuit to the transmission path 460 or the reception path 470. The second switching circuit 483 may be configured to selectively connect an output end of the RF processing circuit to the transmission path 460 or the reception path 470. For example, in a case that the RF processing circuit is used for transmission of the signal, the first switching circuit 481 may be configured to connect the input end of the RF processing circuit and the transmission path 460, and the second switching circuit 483 may be configured to connect the output end of the RF processing circuit and the transmission path 460. For example, in a case that the RF processing circuit is used for reception of the signal, the first switching circuit 481 may be configured to connect the input end of the RF processing circuit and the reception path 470, and the second switching circuit 483 may be configured to connect the output end of the RF processing circuit and the reception path 470.

Hereinafter, operations of the control circuit 380 for controlling the DPD circuit 210 through the front-end structure illustrated in FIG. 4A and FIG. 4B are described.

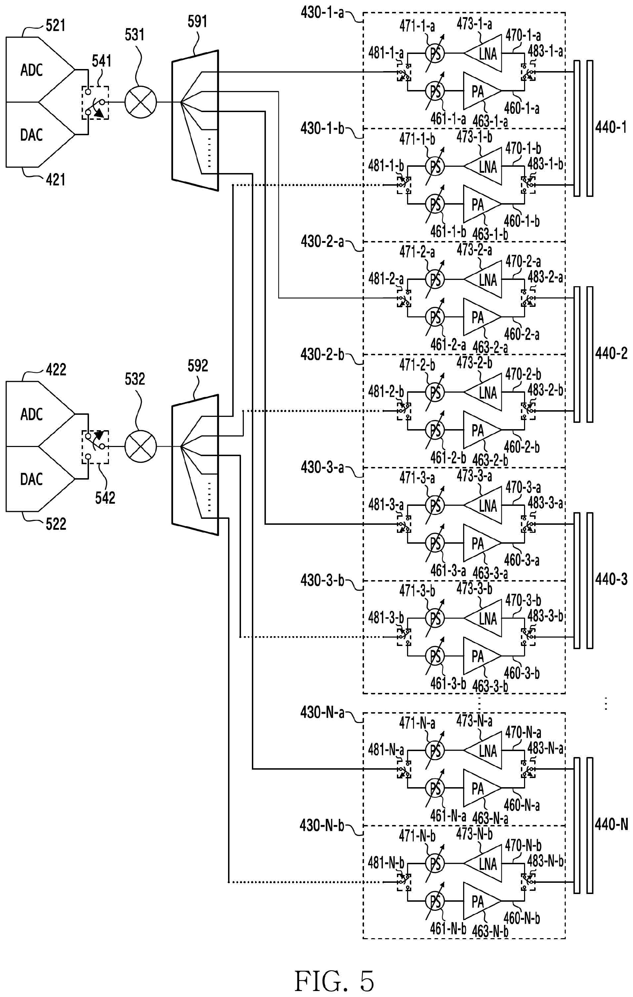

FIG. 5 illustrates an example of an RF transceiver circuit 430 of an electronic device (e.g., a base station 110, or an RU 112). The same reference numerals may be used to refer to descriptions in the present drawing and other drawings.

Referring to FIG. 5, the electronic device may include an RF transceiver circuit 430. The RF transceiver circuit 430 may include a DAC 421, an ADC 521, a switching circuit 541, a mixer 531, a divider 591, and a first RF transceiver circuit 430-a for a first polarization. The electronic device (e.g., a control circuit 380) may control the switching circuit 541 to be connected to one of the DAC 421 and the ADC 521 according to whether the first RF transceiver circuit 430-a is used for transmission or used for reception. The divider 591 may be configured to branch a path into a plurality of paths. The divider 591 is referred to as a divider in terms of signal transmission, but may be referred to as a combiner in terms of signal reception. The first RF transceiver circuit 430-a may include first RF processing circuits for a plurality of antennas 440. The plurality of antennas 440 may respectively correspond to the first RF processing circuits. For example, among the plurality of antennas 440, an antenna 440-n may be connected to one of the first RF processing circuits. As an example, a first antenna 440-1 may be connected to an RF processing circuit #1-a 430-1-a among the first RF processing circuits. A second antenna 440-2 may be connected to an RF processing circuit #2-a 430-2-a among the first RF processing circuits. A third antenna 440-3 may be connected to an RF processing circuit #3-a 430-3-a among the first RF processing circuits. An n-th antenna 440-n may be connected to an RF processing circuit #n-a 430-n-a among the first RF processing circuits.

The RF transceiver circuit 430 may include an ADC 422, a DAC 522, a switching circuit 542, a mixer 532, a combiner 592, and a second RF transceiver circuit 430-b for a second polarization. The electronic device (e.g., the control circuit 380) may control the switching circuit 541 to be connected to one of the ADC 422 and the DAC 522 according to whether the second RF transceiver circuit 430-b is used for transmission or used for reception. The combiner 592 may be configured to branch a path into a plurality of paths. The combiner 592 is referred to as a combiner in terms of signal reception, but may be referred to as a divider in terms of signal transmission. The second RF transceiver circuit 430-b may include second RF processing circuits for the plurality of antennas 440. The plurality of antennas 440 may respectively correspond to the second RF processing circuits. For example, among the plurality of antennas 440, the antenna 440-n may be connected to one of the second RF processing circuits. As an example, the first antenna 440-1 may be connected to an RF processing circuit #1-b 430-1-b among the second RF processing circuits. The second antenna 440-2 may be connected to an RF processing circuit #2-b 430-2-b among the second RF processing circuits. The third antenna 440-3 may be connected to an RF processing circuit #3-b 430-3-b among the second RF processing circuits. The n-th antenna 440-n may be connected to an RF processing circuit #n-b 430-n-b among the second RF processing circuits.

The RF processing circuit 430-1-a for the first polarization and the first antenna 440-1 may include a transmission path 460-1-a and a reception path 470-1-a. The transmission path 460-1-a may include a phase shifter 461-1-a and a power amplifier 463-1-a. The RF processing circuit may include switches (e.g., a first switching circuit 481-1-a and a second switching circuit 483-1-a) for selectively activating the transmission path 460-1-a and the reception path 470-1-a.

The RF processing circuit 430-1-b for the second polarization and the first antenna 440-1 may include a transmission path 460-1-b and a reception path 470-1-b. The transmission path 460-1-b may include a phase shifter 461-1-b and a power amplifier 463-1-b. The RF processing circuit may include switches (e.g., a first switching circuit 481-1-b and a second switching circuit 483-1-b) for selectively activating the transmission path 460-1-b and the reception path 470-1-b.

The RF processing circuit 430-2-a for the first polarization and the second antenna 440-2 may include a transmission path 460-2-a and a reception path 470-2-a. The transmission path 460-2-a may include a phase shifter 461-2-a and a power amplifier 463-2-a. The RF processing circuit may include switches (e.g., a first switching circuit 481-2-a and a second switching circuit 483-2-a) for selectively activating the transmission path 460-2-a and the reception path 470-2-a.

The RF processing circuit 430-2-b for the second polarization and the second antenna 440-2 may include a transmission path 460-2-b and a reception path 470-2-b. The transmission path 460-2-b may include a phase shifter 461-2-b and a power amplifier 463-2-b. The RF processing circuit may include switches (e.g., a first switching circuit 481-2-b and a second switching circuit 483-2-b) for selectively activating the transmission path 460-2-b and the reception path 470-2-b.

The RF processing circuit 430-3-a for the first polarization and the third antenna 440-3 may include a transmission path 460-3-a and a reception path 470-3-a. The transmission path 460-3-a may include a phase shifter 461-3-a and a power amplifier 463-3-a. The RF processing circuit may include switches (e.g., a first switching circuit 481-3-a and a second switching circuit 483-3-a) for selectively activating the transmission path 460-3-a and the reception path 470-3-a.

The RF processing circuit 430-3-b for the second polarization and the third antenna 440-3 may include a transmission path 460-3-b and a reception path 470-3-b. The transmission path 460-3-b may include a phase shifter 461-3-b and a power amplifier 463-3-b. The RF processing circuit may include switches (e.g., a first switching circuit 481-3-b and a second switching circuit 483-3-b) for selectively activating the transmission path 460-3-b and the reception path 470-3-b.

The RF processing circuit 430-N-a for the first polarization and the N-th antenna 440-N may include a transmission path 460-N-a and a reception path 470-N-a. The transmission path 460-N-a may include a phase shifter 461-N-a and a power amplifier 463-N-a. The RF processing circuit may include switches (e.g., a first switching circuit 481-N-a and a second switching circuit 483-N-a) for selectively activating the transmission path 460-N-a and the reception path 470-N-a.

The RF processing circuit 430-N-b for the second polarization and the N-th antenna 440-N may include a transmission path 460-N-b and a reception path 470-N-b. The transmission path 460-N-b may include a phase shifter 461-N-b and a power amplifier 463-N-b. The RF processing circuit may include switches (e.g., a first switching circuit 481-N-b and a second switching circuit 483-N-b) for selectively activating the transmission path 460-N-b and the reception path 470-N-b.

The electronic device (e.g., the control circuit 380) may transmit a transmission signal through a transmission path. For example, the electronic device may transmit the transmission signal through a transmission path of the RF processing circuit #1-a 430-1-a connected to the first antenna 440-1 in the first RF transceiver circuit 430-a for a first polarization. While the first RF transceiver circuit 430-a is used for signal transmission, each transmission path of first RF processing circuits of the first RF transceiver circuit 430-a may all be activated. For example, a first switching circuit 481 and a second switching circuit 483 of each RF processing circuit may be connected to a transmission path 460. According to an embodiment, in order to prevent the transmission signals from being radiated through other transmission paths, among transmission paths of the first RF transceiver circuit 430-a, the electronic device (e.g., the control circuit 380) may deactivate power amplifiers of the transmission paths excluding the transmission path (e.g., a transmission path of the RF processing circuit #1-a 430-1-a).

The electronic device (e.g., the control circuit 380) may obtain reception signals corresponding to the transmission signal through a plurality of reception paths. For example, the electronic device may obtain a first reception signal through a reception path of the RF processing circuit #1-b 430-1-b connected to the first antenna 440-1 in the second RF transceiver circuit 430-b for the second polarization. In addition, the electronic device may obtain a second reception signal through a reception path of the RF processing circuit #2-b 430-2-b connected to the second antenna 440-2 in the second RF transceiver circuit 430-b for the second polarization. In such a manner, the electronic device may obtain reception signals in two or more reception paths. While the second RF transceiver circuit 430-b is used for signal reception, each reception path of second RF processing circuits of the second RF transceiver circuit 430-b may all be activated. For example, the first switching circuit 481 and the second switching circuit 483 of each RF processing circuit may be connected to a reception path 470. According to an embodiment, in order to prevent that reception signals of other reception paths are combined through a combiner 592 to cause inaccurate control of the DPD circuit 210, the electronic device (e.g., the control circuit 380) may activate only a low noise amplifier of a specific reception path and may deactivate low noise amplifiers of other reception paths. For example, the control circuit 380 may deactivate low noise amplifiers of the reception paths excluding a reception path (e.g., a reception path of the RF processing circuit #1-b 430-1-b) among reception paths of the second RF transceiver circuit 430-b. The control circuit 380 may obtain a first reception signal of the reception path. For example, the control circuit 380 may deactivate low noise amplifiers of reception paths excluding a reception path (e.g., a reception path of an RF processing circuit #2-b 430-2-b) among reception paths of the second RF transceiver circuit 430-b.

The control circuit 380 may obtain reception signals through reception paths. The reception paths may be connected to different antennas. The reception paths are not separate feedback paths configured for DPD control, and the reception paths indicate paths utilized for DPD control among paths configured for data reception. For example, an antenna (e.g., the first antenna 440-1) used to transmit a transmission signal may be identical to an antenna (e.g., the first antenna 440-1) connected to a reception path. However, since an RF processing circuit (e.g., the RF processing circuit #1-a 430-1-a) including a transmission path of the transmission signal and an RF processing circuit (e.g., the RF processing circuit #1-b 430-1-b) including the reception path are physically distinguished, a predetermined loss (e.g., about 20 dB or less) may occur. For example, the antenna (e.g., the first antenna 440-1) used to transmit the transmission signal may be different from an antenna (e.g., the third antenna 440-3) connected to the reception path. Due to a distance between antennas, a predetermined loss (e.g., about 70 dB or less) may occur.

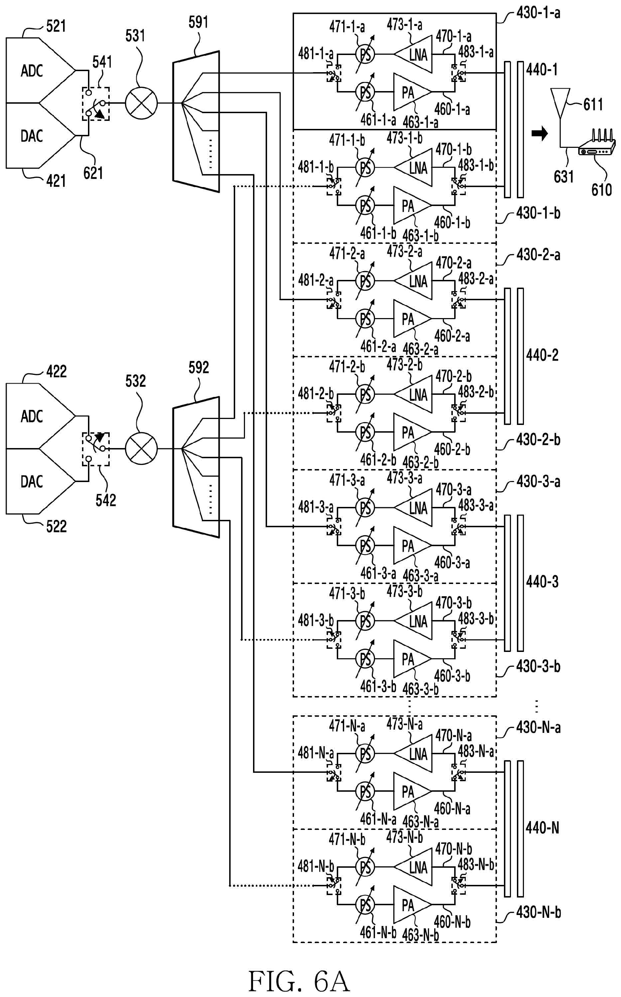

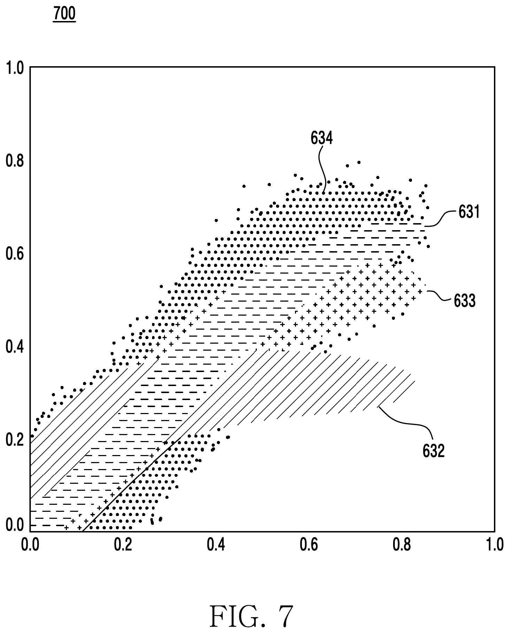

As in the above-described examples, reception paths for obtaining reception signals for DPD control may be various. The control circuit 380 may obtain a predicted reception signal based on the reception signals obtained through various reception paths. The predicted reception signal indicates a signal predicted to have been actually received in an external electronic device performing communication with the electronic device. According to an embodiment, the control circuit 380 may obtain the predicted reception signal through machine learning using the reception signals. By obtaining the reception signals through various paths, a distribution of input data for the machine learning may become various. For example, through RF processing circuits (e.g., an RF processing circuit for the first polarization, or an RF processing circuit for the second polarization) sharing a radiator, a spacing between a specific transmission path and each reception path may be various. As the distribution of the input data becomes various, accuracy of the machine learning may be improved. The electronic device according to embodiments of the present disclosure, as illustrated in FIG. 4A, FIG. 4B, and FIG. 5, improves a performance of the machine learning through various reception paths, thereby enabling more accurate DPD control. Hereinafter, an example of operations for each reception path are illustrated through FIG. 6A to FIG. 6D and FIG. 7.

FIG. 6A to FIG. 6D illustrate an example of reception signals. The same reference numerals may be used to refer to descriptions in the present drawing and other drawings.

Referring to FIG. 6A, an electronic device may include an RF transceiver circuit 430. The RF transceiver circuit 430 may include a DAC 421, an ADC 521, a switching circuit 541, a mixer 531, a divider 591, and a first RF transceiver circuit 430-a for a first polarization. The RF transceiver circuit 430 may include an ADC 422, a DAC 522, a switching circuit 542, a mixer 532, a combiner 592, and a second RF transceiver circuit 430-b for a second polarization. The electronic device may transmit a transmission signal 621. The electronic device may transmit the transmission signal 621 to an external electronic device 610. For example, the electronic device may transmit the transmission signal 621 to the external electronic device 610 through a first RF processing circuit 430-1-a of the first RF transceiver circuit 430-a and a first antenna 440-1. The transmission signal 621 may be transmitted to the external electronic device 610 through a wireless channel. The transmission signal 621 may be distorted while passing through a transmission path (e.g., a transmission path of the first RF processing circuit 430-1-a) including a power amplifier and the wireless channel. In addition to an influence due to the wireless channel, in order to recognize distortion due to the transmission path in advance, the electronic device may want to know a reception signal 631 obtained in the external electronic device 610. The external electronic device 610 may obtain the reception signal 631 through an antenna 611. The reception signal 631 may be referred to as y_{OTA}. The reception signal 631 may be a signal that the electronic device wants to obtain.

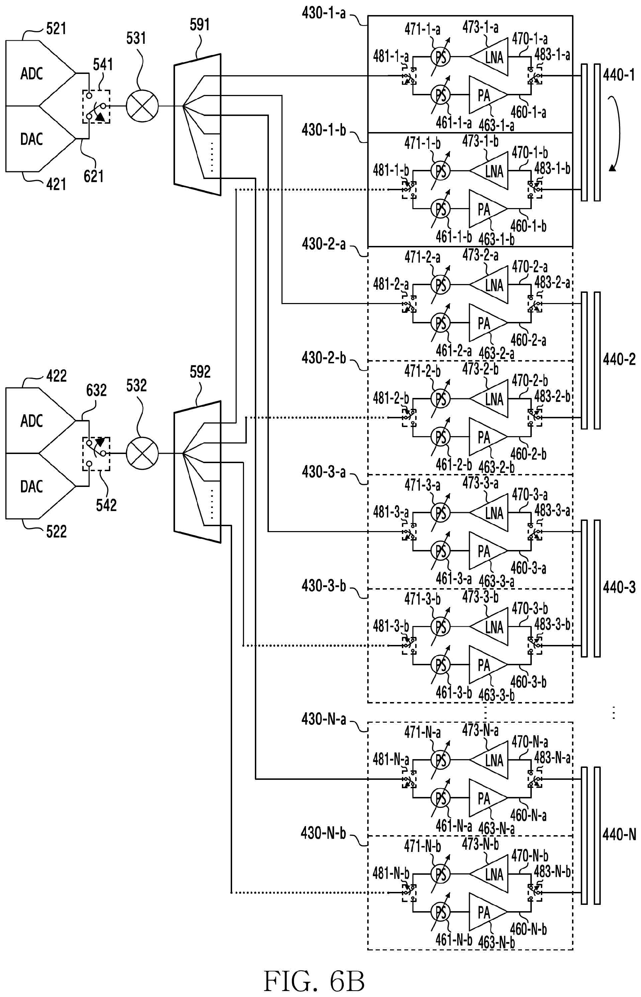

Referring to FIG. 6B, the electronic device may include the RF transceiver circuit 430. The RF transceiver circuit 430 may include the DAC 421, the ADC 521, the switching circuit 541, the mixer 531, the divider 591, and the first RF transceiver circuit 430-a for the first polarization. The RF transceiver circuit 430 may include the ADC 422, the DAC 522, the switching circuit 542, the mixer 532, the combiner 592, and the second RF transceiver circuit 430-b for the second polarization. The electronic device may transmit the transmission signal 621. For example, the electronic device may transmit the transmission signal 621 through an RF processing circuit #1-a 430-1-a of the first RF transceiver circuit 430-a and the first antenna 440-1. While the transmission signal 621 is transmitted, a control circuit 380 may deactivate power amplifiers of other transmission paths so that a signal is not transmitted through the other transmission paths excluding the transmission path of the RF processing circuit #1-a 430-1-a. Due to signal transmission of the first polarization, the transmission paths may be electrically connected to antennas 440 through at least one switch (e.g., a first switching circuit 481 and a second switching circuit 483). However, in each transmission path excluding the transmission path of the RF processing circuit #1-a 430-1-a, a power amplifier may be turned off.

The electronic device may receive the transmission signal 621 through the first antenna 440-1. The transmission signal 621 may be transmitted to a reception path of an RF processing circuit #1-b 430-1-b connected to the first antenna 440-1. The electronic device may obtain a first reception signal 632 through the reception path of the RF processing circuit #1-b 430-1-b. While the first reception signal 632 is received through the reception path of the RF processing circuit #1-b 430-1-b, the control circuit 380 may deactivate low noise amplifiers of other reception paths so that unnecessary signals are not combined through the other reception paths excluding the reception path (e.g., combination by the combiner 592). Reception paths of RF processing circuits of the second RF transceiver circuit 430-b may be electrically connected to the antennas 440 through at least one switch (e.g., the first switching circuit 481 and the second switching circuit 483). However, in each reception path excluding the reception path of the RF processing circuit #1-b 430-1-b, a low noise amplifier may be turned off. A low noise amplifier (e.g., LNA₀) of the reception path of the RF processing circuit #1-b 430-1-b may be turned on. The first reception signal 632 may be obtained in the ADC 422 through the low noise amplifier of the reception path of the RF processing circuit #1-b 430-1-b. The first reception signal 632 may be referred to as y_{LB0}.

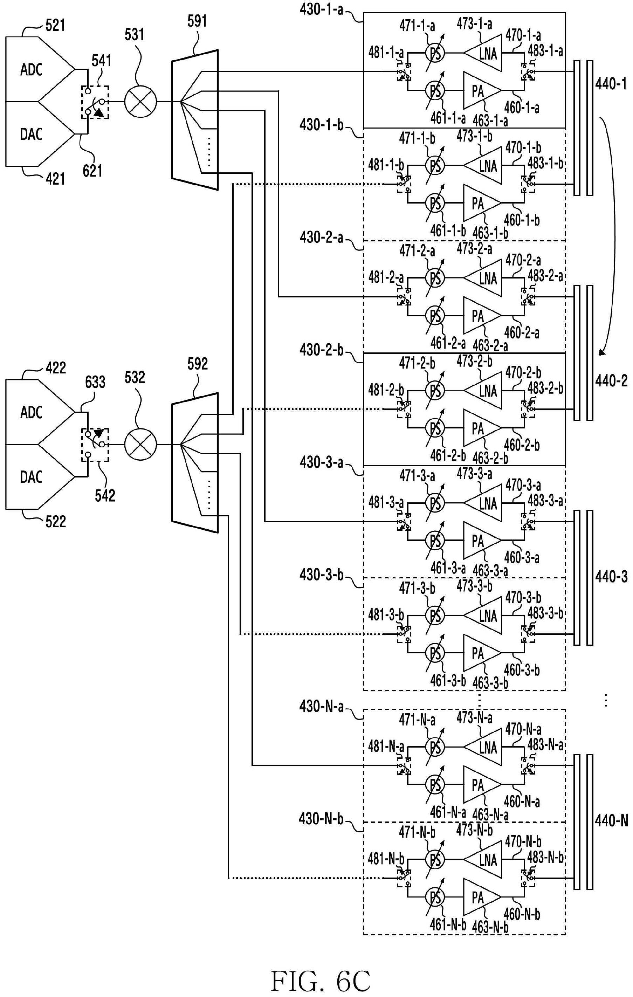

Referring to FIG. 6C, the electronic device may include the RF transceiver circuit 430. The RF transceiver circuit 430 may include the DAC 421, the ADC 521, the switching circuit 541, the mixer 531, the divider 591, and the first RF transceiver circuit 430-a for the first polarization. The RF transceiver circuit 430 may include the ADC 422, the DAC 522, the switching circuit 542, the mixer 532, the combiner 592, and the second RF transceiver circuit 430-b for the second polarization. The electronic device may transmit the transmission signal 621. For example, the electronic device may transmit the transmission signal 621 through the first RF processing circuit 430-1-a of the first RF transceiver circuit 430-a and the first antenna 440-1. While the transmission signal 621 is transmitted, the control circuit 380 may deactivate power amplifiers of other transmission paths so that a signal is not transmitted through the other transmission paths excluding a transmission path of the RF processing circuit #1-a 430-1-a. Due to signal transmission of the first polarization, the transmission paths may be electrically connected to the antennas 440 through at least one switch (e.g., the first switching circuit 481 and the second switching circuit 483). However, in each transmission path excluding the transmission path of the RF processing circuit #1-a 430-1-a, a power amplifier may be turned off.

The electronic device may receive the transmission signal 621 through a second antenna 440-2. The transmission signal 621 may be transmitted to a reception path of an RF processing circuit #2-b 430-2-b connected to the second antenna 440-2. The electronic device may obtain a second reception signal 633 through the reception path of the RF processing circuit #2-b 430-2-b. While the second reception signal 633 is received through the reception path of the RF processing circuit #2-b 430-2-b, the control circuit 380 may deactivate low noise amplifiers of other reception paths so that unnecessary signals are not combined through the other reception paths excluding the reception path (e.g., combination by the combiner 592). Reception paths of RF processing circuits of the second RF transceiver circuit 430-b may be electrically connected to the antennas 440 through at least one switch (e.g., the first switching circuit 481 and the second switching circuit 483). However, in each reception path excluding the reception path of the RF processing circuit #2-b 430-2-b, a low noise amplifier may be turned off. For example, the electronic device may turn off a low noise amplifier (e.g., LNA₀) used to obtain the first reception signal 632. Meanwhile, a low noise amplifier (e.g., LNA₁) of the reception path of the RF processing circuit #2-b 430-2-b may be turned on. The second reception signal 633 may be obtained in the ADC 422 through the low noise amplifier of the reception path of the RF processing circuit #2-b 430-2-b. The second reception signal 633 may be referred to as y_{LB1}.

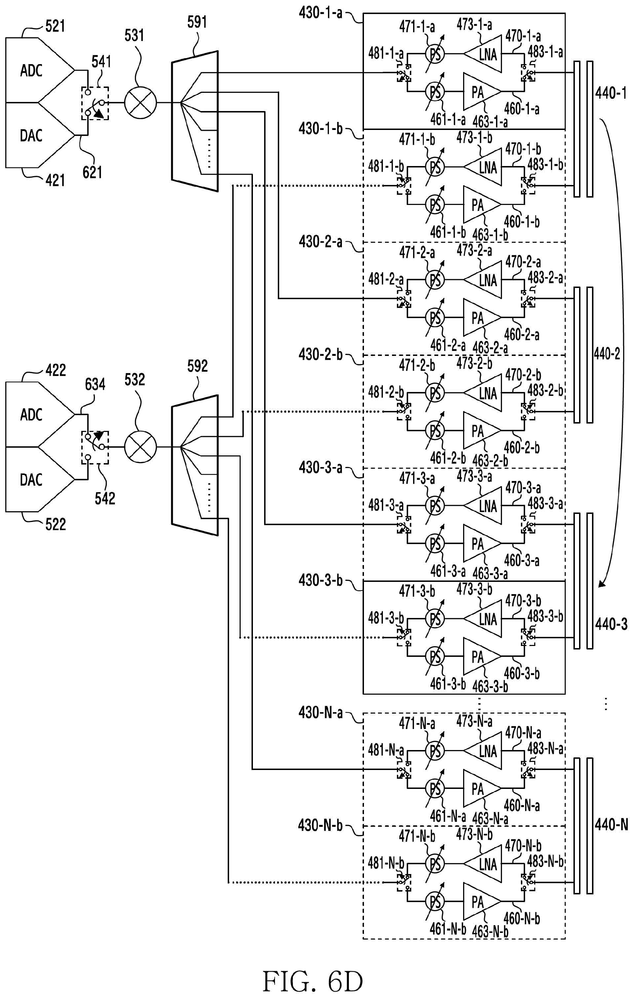

Referring to FIG. 6D, the electronic device may include the RF transceiver circuit 430. The RF transceiver circuit 430 may include the DAC 421, the ADC 521, the switching circuit 541, the mixer 531, the divider 591, and the first RF transceiver circuit 430-a for the first polarization. The RF transceiver circuit 430 may include the ADC 422, the DAC 522, the switching circuit 542, the mixer 532, the combiner 592, and the second RF transceiver circuit 430-b for the second polarization. The electronic device may transmit the transmission signal 621. For example, the electronic device may transmit the transmission signal 621 through the first RF processing circuit 430-1-a of the first RF transceiver circuit 430-a and a first antenna 440-1. While the transmission signal 621 is transmitted, the control circuit 380 may deactivate power amplifiers of other transmission paths so that a signal is not transmitted through the other transmission paths excluding the transmission path of the RF processing circuit #1-a 430-1-a. Due to signal transmission of the first polarization, the transmission paths may be electrically connected to the antennas 440 through at least one switch (e.g., the first switching circuit 481 and the second switching circuit 483). However, in each transmission path excluding the transmission path of the RF processing circuit #1-a 430-1-a, a power amplifier may be turned off.

The electronic device may receive the transmission signal 621 through a third antenna 440-3. The transmission signal 621 may be transmitted to a reception path of an RF processing circuit #3-b 430-3-b connected to the third antenna 440-3. The electronic device may obtain a third reception signal 634 through the reception path of the RF processing circuit #3-b 430-3-b. While the third reception signal 634 is received through the reception path of the RF processing circuit #3-b 430-3-b, the control circuit 380 may deactivate low noise amplifiers of other reception paths so that unnecessary signals are not combined through the other reception paths excluding the reception path (e.g., combination by the combiner 592). Reception paths of RF processing circuits of the second RF transceiver circuit 430-b may be electrically connected to the antennas 440 through at least one switch (e.g., the first switching circuit 481 and a second switching circuit 483). However, in each reception path excluding the reception path of the RF processing circuit #3-b 430-3-b, a low noise amplifier may be turned off. For example, the electronic device may turn off a low noise amplifier (e.g., LNA₁) used to obtain a second reception signal 633. Meanwhile, a low noise amplifier (e.g., LNA₂) of the reception path of the RF processing circuit #3-b 430-3-b may be turned on. The third reception signal 634 may be obtained in the ADC 422 through the low noise amplifier of the reception path of the RF processing circuit #3-b 430-3-b. The third reception signal 634 may be referred to as y_{LB2}.

FIG. 7 illustrates an example of a distribution of reception signals. The reception signals may be obtained through different paths with respect to the same transmission signal. In FIG. 7, a distribution of the reception signals obtained through FIG. 6A, FIG. 6B, FIG. 6C, and FIG. 6D is described.

Referring to FIG. 7, a graph 700 indicates reception signals with respect to a transmission signal (e.g., a transmission signal 621). A horizontal axis of the graph 700 indicates a size of the transmission signal, and a vertical axis indicates a size of a reception signal. Wireless signals may be distorted according to a variable channel or a hardware state. The graph 700 indicates a distribution of reception signals collected according to the transmission signal in order to indicate a tendency of the distortion. A reception signal 631 (y_{OTA} or yₕ) indicates signals received in an external electronic device 610 in response to transmission of the transmission signal 621, as illustrated in FIG. 6A. A first reception signal 632 indicates received signals obtained through a reception path of an RF processing circuit #1-b 430-1-b of a second RF transceiver circuit 430-b of a first antenna 440-1 in response to transmission of the transmission signal 621, as illustrated in FIG. 6B. A second reception signal 633 indicates received signals obtained through a reception path of an RF processing circuit #2-b 430-2-b of a second RF transceiver circuit 430-b of a second antenna 440-2 in response to transmission of the transmission signal 621, as illustrated in FIG. 6C. A third reception signal 634 indicates received signals obtained through a reception path of an RF processing circuit #3-b 430-3-b of a second RF transceiver circuit 430-b of a third antenna 440-3 in response to transmission of the transmission signal 621, as illustrated in FIG. 6D.

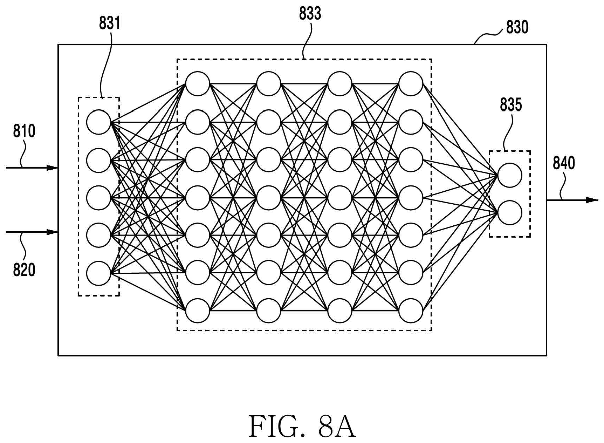

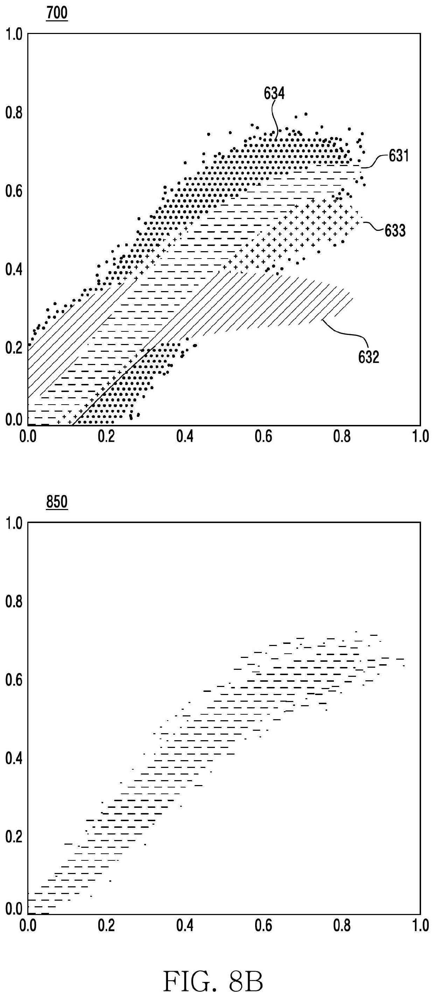

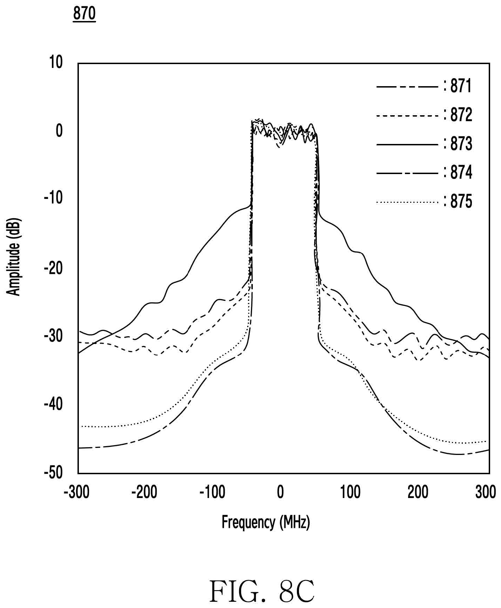

When the reception signal 631 which is a wanted signal of a control circuit 380 and the first reception signal 632 are compared, it may be identified that the first reception signal 632 has relatively less distortion at a low output while having relatively more distortion at a high output. When the reception signal 631 and the second reception signal 633 are compared, it may be identified that the second reception signal 633 includes a large amount of noise components. The electronic device (e.g., the control circuit 380) may want to know how a signal is actually received in the external electronic device 610. However, whenever control parameters of a DPD circuit 210 are updated, transmitting a signal to the external electronic device 610 and receiving feedback information (e.g., information on the reception signal 631) on the signal may be inefficient. Not only resources may be wasted due to updates, but also a current state may not be accurately reflected due to physical time delay. According to embodiments, the control circuit 380 may obtain a predicted reception signal through reception signals (e.g., the first reception signal 632, the second reception signal 633, and/or the third reception signal 634) obtained through reception paths inside the electronic device through antennas. The predicted reception signal indicates a signal predicted to have been actually received in the external electronic device performing communication with the electronic device. Machine learning may be performed so that the predicted reception signal becomes close to the reception signal 631. The electronic device (e.g., the control circuit 380) may obtain the predicted reception signal by performing the machine learning, or may obtain the predicted reception signal which is a result of the machine learning through a separate device (e.g., a server) connected to the electronic device. The predicted reception signal may be referred to as y_{NN}. Hereinafter, operations for the machine learning are described through FIG. 8A, FIG. 8B, and FIG. 8C.

FIG. 8A, FIG. 8B, and FIG. 8C illustrate an example of machine learning using reception signals.

Referring to FIG. 8A, the machine learning may provide output data 840 based on input data 810 and/or training data 820. The machine learning may use a neural network model 830.

The neural network model 830 may include an input region 831, an operation region 833, and an output region 835. The input region 831 may be referred to as an input layer. For example, the input data 810 may include data on reception signals. The reception signals may include data obtained through reception paths connected to different antennas. The input data 810 may be divided by a reception path (or an antenna). In addition, the input data 810 may be divided into a real number and an image number. In addition, the input data 810 may be divided over time. According to a division of the input data 810, the number of nodes of the input region 831 may be determined. The operation region 833 may be referred to as a hidden layer. The output region 835 may be referred to as an output layer. In the input region 831, the input data 810 may be input. The operation region 833 may include one or more nodes. Herein, a node may be a factor which becomes a target of each determination. Each determination may be determined based on a probability. The probability may be represented as a weight. For example, the operation region 833 may include four hidden layers. A weight from a specific node to another node may indicate an influence of a determination of the specific node on a determination of the another node. The weight may be, for example, a prior probability for a specific event or a posterior probability for an event occurring under a premise of the specific event. The neural network model 830 may use various types of neural networks. For example, the neural network model 830 may use a convolutional neural network (CNN). For example, the neural network model 830 may use a multilayer perceptron (MLP). For example, the neural network model 830 may use a support vector machine (SVM). The neural network model 830 may provide an output result according to an input value (e.g., a first reception signal 632 or a second reception signal 633). The output result may be provided as the output data 840 through the output region 835. The output data 840 may indicate, as a result of the machine learning, a result of predicting a signal (e.g., a reception signal 631, y_{OTA}, or yₕ) when a transmission signal 621 is transmitted to an external electronic device (e.g., an external electronic device 610). For example, the result may be divided into a real number and an image number. The output data 840 may include two nodes.

As an example, the input data 810 may include information on a reception signal y_{bk} obtained through a k-th reception path (e.g., an RF processing circuit #k-b 430-k-b). The information may include values divided as shown in the example below in order to reflect an influence of a time delay by a DPD.
1) real(y_{bk}(n)), real(y_{bk}(n-1)), ... real(y_{bk}(n-4))
2) imag(y_{bk}(n)), imag(y_{bk}(n-1)), ..., imag(y_{bk}(n-4))
3) |y_{bk}(n)|, |y_{bk}(n-1)|, ..., |y_{bk}(n-4)|
4) |y_{bk}(n)|², |y_{bk}(n-1)|², ..., |y_{bk}(n-4)|²
5) |y_{bk}(n)|⁴, |y_{bk}(n-1)|⁴, ..., |y_{bk}(n-4)|⁴

Herein, n, n-1, and n-2 indicate time delays in the DPD, real() indicates a real number, and imag() indicates an image value. |*x*| indicates a size of x. Values having five different time delays are exemplary, and values having more time delays may be used as the input data 810 according to a setting and a capability of a DPD circuit 210. In addition, a square of an item 4 and/or a fourth power of an item 5 are exemplary, and the above-described five items are not construed as limiting embodiments of the present disclosure. For example, at least a portion of the above-described information may be omitted. In addition, as a non-limiting example, not only a reception signal but also a transmission signal itself may be used as the input data 810. For example, input values having five different time delays (e.g., |x(n)|, |x(n-1)|, ..., |x(n-4)|) may be used as the input data 810.

According to an embodiment, the input data 810 may be reception signals from reception paths for a polarization (e.g., a first polarization) and another polarization (e.g., a second polarization) of a transmission signal (e.g., the transmission signal 621). For example, the input data 810 may include the first reception signal 632 of a reception path of an RF processing circuit #1-b 430-1-b connected to a first antenna 440-1 and the second reception signal 633 of a reception path of an RF processing circuit #2-b 430-2-b connected to a second antenna 440-2. A control circuit 380 may output a predicted reception signal through machine learning using the first reception signal 632 and the second reception signal 633. For another example, the input data 810 may include the first reception signal 632, the second reception signal 633, and a third reception signal 634 of a reception path of an RF processing circuit #3-b 430-3-b connected to a third antenna 440-3. In order to obtain more various data, the control circuit 380 may obtain a reception signal received through another antenna. Hereinafter, an example of learning through two reception signals or three reception signals is described, but embodiments of the present disclosure are not limited thereto. The control circuit 380 may also output the predicted reception signal through machine learning using reception signals obtained from each of reception paths connected to four or more antennas.

According to an embodiment, the input data 810 may include the transmission signal (e.g., the transmission signal 621). In order to increase a performance of the neural network model 830, the reception signals and the transmission signal may be used as the input data 810 of the neural network model 830.

According to an embodiment, in order to perform supervised learning of the neural network model 830, the training data 820 may be provided to the neural network model 830. For example, the control circuit 380 may obtain information on a signal (e.g., the reception signal 631 y_{OTA}) received in the external electronic device 610 in response to transmission of the transmission signal 621. Not only signals received through antennas of the electronic device but also a signal obtained through a separate receiver (e.g., the external electronic device 610) may be used, thereby accuracy of the output data 840 of the neural network model 830 may be improved.

Referring to FIG. 8B, a graph 850 indicates, as the output data 840, a data distribution of a predicted reception signal. A horizontal axis of the graph 850 indicates a size of the transmission signal, and a vertical axis indicates a size of the predicted reception signal. By learning the input data 810 according to a power level, data on the predicted reception signal close to a signal (e.g., the reception signal 631) to be actually obtained may be obtained.

Referring to FIG. 8C, a graph 870 indicates an amplitude per frequency. A horizontal axis of the graph 870 indicates a frequency (unit: megahertz (MHz)), and a vertical axis of the graph 870 indicates an amplitude (unit: decibel (dB)). A first line 871 indicates a signal spectrum of a signal (e.g., the first reception signal 632) obtained through a reception path (e.g., the reception path of the RF processing circuit #1-b 430-1-b) connected to an antenna (e.g., the first antenna 440-1). A second line 872 indicates a signal spectrum of a signal (e.g., the second reception signal 633) obtained through a reception path (e.g., the reception path of the RF processing circuit #2-b 430-2-b) connected to an antenna (e.g., the second antenna 440-2). A third line 873 indicates a signal spectrum of a signal (e.g., the third reception signal 634) obtained through a reception path (e.g., the reception path of the RF processing circuit #3-b 430-3-b) connected to an antenna (e.g., the third antenna 440-3). A fourth line 874 indicates a signal spectrum of a signal (e.g., the reception signal 631) received through a separate receiver (e.g., the external electronic device 610). A fifth line 875 indicates a signal spectrum of the predicted reception signal through machine learning. For example, the machine learning may be performed by using the first reception signal 632, the second reception signal 633, and the third reception signal 634 as input data. The first line 871, the second line 872, and the third line 873 have shapes different from a shape of the fourth line 874, whereas the fifth line 875 may have a shape similar to the shape of the fourth line 874. Through the machine learning, a spectrum of a signal in which noise is reduced may be obtained. Through the machine learning, a spectrum of the fifth line 875 having a characteristic (e.g., ACP) similar to that of the fourth line 874 which is an actual transmission signal may be obtained.

As described above, through the machine learning, a signal (e.g., the predicted reception signal, y_{NN}) having a spectrum identical or similar to a spectrum of a signal (e.g., the reception signal 631) obtained at an actual reception end may be obtained. According to an embodiment, the electronic device may be configured to, while the machine learning is in progress, set the DPD circuit 210 based on a signal (e.g., the reception signal 631) received through the separate receiver (e.g., the external electronic device 610). The electronic device may be configured to, after the machine learning, set the DPD circuit 210 based on a learning result without using the received signal (e.g., the reception signal 631). At least one of the first reception signal 632, the second reception signal 633, and/or the third reception signal 634 may be used as input data of the machine learning. As a non-limiting example, as input data (e.g., the input data 810) of a model (e.g., the neural network model 830) of the machine learning, not only reception signals of each path but also a transmission signal (e.g., |x|) may be used together.

In the above-described examples, reception signals are obtained through reception paths, and an example of obtaining a predicted reception signal through the machine learning using the obtained reception signals has been described, but embodiments of the present disclosure are not limited thereto. According to an embodiment, the electronic device may obtain the reception signals for the machine learning by using not only the reception paths but also a transmission path. For example, the electronic device may transmit the transmission signal 621 through a first RF transceiver circuit 430-a, a first RF processing circuit 430-1-a, and the first antenna 440-1. The electronic device may obtain the reception signal 631 obtained in the external electronic device 610. Thereafter, the electronic device may activate a low noise amplifier (e.g., LNA₀) of the reception path of the RF processing circuit #1-b 430-1-b. The electronic device may control a switch (e.g., a second switching circuit 483-1-b) in order to support a polarization different from a polarization of the transmission signal 621 and to activate a transmission path connected to the first antenna 440-1. The electronic device may obtain a first reception signal (e.g., y_{LB1}) through the reception path. The electronic device may control the switch (e.g., the second switching circuit 483-1-b) in order to support the polarization different from the polarization of the transmission signal 621 and to activate a reception path connected to the first antenna 440-1. The electronic device may obtain a second reception signal (e.g., y_{LB2}) through the reception path. The electronic device may obtain a predicted reception signal through machine learning using the first reception signal (e.g., y_{LB1}) and the second reception signal (e.g., y_{LB2}). The electronic device may determine coefficients of the DPD circuit 210 based on the predicted reception signal. The electronic device may set the DPD circuit 210 according to the determined coefficients. Within the same antenna (e.g., the first antenna 440-1), reception signals passing through various paths (e.g., a transmission path and a reception path) may be obtained through a path setting. The reception signals may be used as input data of the machine learning. As a non-limiting example, as input data of the machine learning, not only the first reception signal (e.g., y_{LB1}) and the second reception signal (e.g., y_{LB2}) but also at least one of the transmission signal 621 and/or the reception signal 631 may be additionally used.

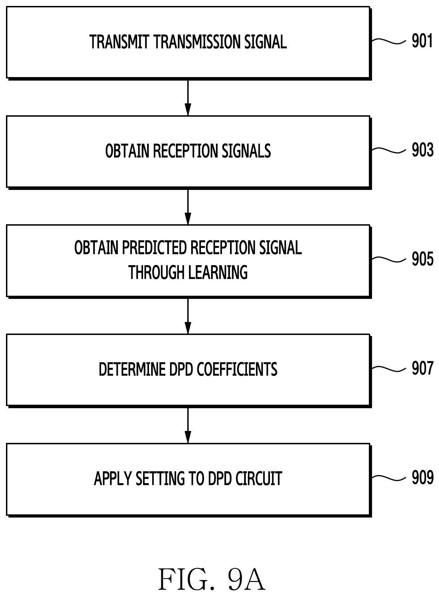

FIG. 9A illustrates operations of an electronic device (e.g., a base station 110, or an RU 112) for setting a DPD circuit (e.g., a DPD circuit 210) through machine learning.

In operation 901, an electronic device (e.g., a control circuit 380) may transmit a transmission signal (e.g., a transmission signal 621). The transmission signal may indicate a signal output through the DPD circuit 210. The electronic device may transmit the transmission signal through a designated transmission path and an antenna.

In operation 903, the electronic device (e.g., the control circuit 380) may obtain reception signals (e.g., a first reception signal 632, a second reception signal 633, and a third reception signal 634). The reception signals may correspond to the transmission signal. For example, the electronic device may obtain a first reception signal (e.g., the first reception signal 632) corresponding to the transmission signal through a first antenna. The first antenna may be used to transmit the transmission signal. The electronic device may obtain a second reception signal (e.g., the second reception signal 633) corresponding to the transmission signal through a second antenna. The electronic device may obtain a third reception signal (e.g., the third reception signal 634) corresponding to the transmission signal through a third antenna. As RF processing circuits for different polarizations are respectively configured for each antenna, the electronic device (e.g., the control circuit 380) may obtain a reception signal corresponding to the transmission signal through an antenna through which the transmission signal is transmitted.

In operation 905, the electronic device (e.g., the control circuit 380) may obtain a predicted reception signal through learning (e.g., the machine learning). The electronic device may obtain the predicted reception signal through the machine learning using the reception signals. The predicted reception signal may indicate a signal that the transmission signal is predicted to be received in an external electronic device (e.g., an external electronic device 610).

In operation 907, the electronic device (e.g., the control circuit 380) may determine DPD coefficients. The electronic device may determine the DPD coefficients based on the predicted reception signal and the transmission signal. The DPD coefficients may be related to an operation (e.g., coefficient multiplication) of a function of each DPD unit of the DPD circuit (e.g., the DPD circuit 210).

In operation 909, the electronic device (e.g., the control circuit 380) may apply a setting to the DPD circuit (e.g., the DPD circuit 210). The electronic device may apply the setting according to the determined DPD coefficients to the DPD circuit 210. The electronic device may provide a control signal indicating the setting according to the DPD coefficients to a digital front end (DFE) block. The DPD circuit 210 may predistort a signal and output the predistorted signal based on the setting.

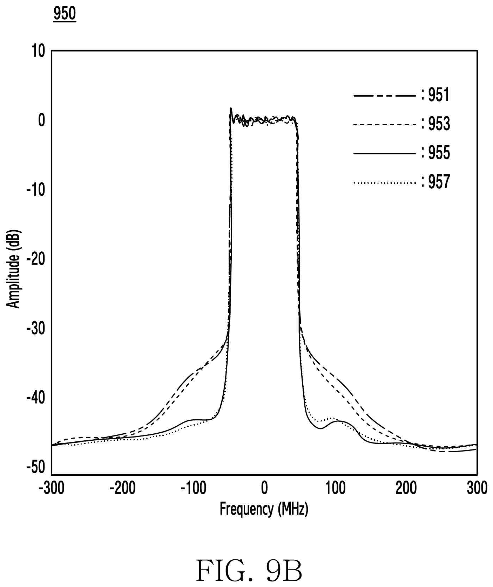

FIG. 9B illustrates examples of a performance of a DPD circuit (e.g., the DPD circuit 210). For example, the performance may indicate an adjacent channel power ratio (ACPR).

Referring to FIG. 9B, a graph 950 indicates an amplitude per frequency. A horizontal axis of the graph 950 indicates a frequency (unit: megahertz (MHz)), and a vertical axis of the graph 950 indicates an amplitude (unit: decibel (dB)). A first line 951 indicates a signal spectrum when a DPD is not performed. A second line 953 indicates a signal spectrum of a signal (e.g., the second reception signal 633) obtained through a reception path (e.g., a reception path of an RF processing circuit #2-b 430-2-b) connected to an antenna (e.g., a second antenna 440-2). A third line 955 indicates a signal spectrum of a signal (e.g., a reception signal 631) received through a separate receiver (e.g., the external electronic device 610). A fourth line 957 indicates a signal spectrum of a predicted reception signal through machine learning. In an order of the first line 951, the second line 953, the third line 955, and the fourth line 957, ACP may be high. In other words, in an order of the first line 951, the second line 953, the third line 955, and the fourth line 957, it may be identified that a degree of distortion of the signal gradually decreases. As a performance of the DPD circuit 210 is improved, a spurious region is alleviated, and the ACP may increase.

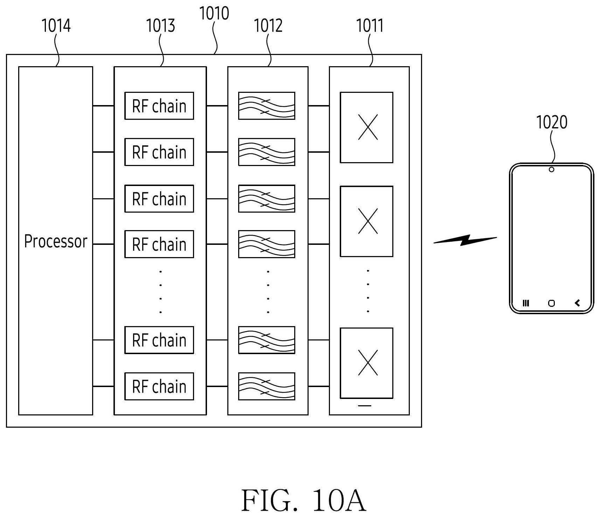

FIG. 10A illustrates an example of components of an electronic device. An electronic device 1010 may be a base station 110 or an RU 112, and an electronic device 1020 may be a terminal 120. As a non-limiting example, the electronic device 1020 may be the base station 110 or the RU 112, and the electronic device 1010 may be the terminal 120. Hereinafter, the electronic device 1010 is described by illustrating the RU 112 as an example as equipment including a plurality of RF chains.

Referring to FIG. 10A, an exemplary functional configuration of the electronic device 1010 is illustrated. The electronic device 1010 may include an antenna unit 1011, a filter unit 1012, a radio frequency (RF) processing unit 1013, and a processor 1014.

The antenna unit 1011 may include a plurality of antennas. An antenna performs functions for transmitting and receiving a signal through a wireless channel. The antenna may include a radiator formed of a conductor or a conductive pattern formed on a substrate (e.g., a PCB). The antenna may radiate an up-converted signal on the wireless channel or obtain a signal radiated by another device. Each antenna may be referred to as an antenna element or an antenna device. According to an embodiment, the antenna unit 1011 may include an antenna array in which a plurality of antenna elements form an array. The antenna unit 1011 may be electrically connected to the filter unit 1012 through RF signal lines. The antenna unit 1011 may be mounted on the PCB including the plurality of antenna elements. The PCB may include a plurality of RF signal lines connecting each antenna element and a filter of the filter unit 1012. These RF signal lines may be referred to as a feeding network. The antenna unit 1011 may provide the filter unit 1012 with a received signal or may radiate a signal provided from the filter unit 1012 into air.

The filter unit 1012 may perform filtering in order to deliver a signal of a desired frequency. The filter unit 1012 may perform a function for selectively identifying a frequency by forming a resonance. The filter unit 1012 may include at least one of a band pass filter, a low pass filter, a high pass filter, or a band reject filter. That is, the filter unit 1012 may include RF circuits for obtaining a signal of a frequency band for transmission or a frequency band for reception. The filter unit 1012 according to various embodiments may electrically connect the antenna unit 1011 and the RF processing unit 1013.

The RF processing unit 1013 may include a plurality of RF processing circuits. According to an embodiment, the RF processing unit 1013 may include an RF transceiver circuit 430. The RF transceiver circuit 430 may include a first RF transceiver circuit 430-a for a first port (e.g., a first polarization) and a second RF transceiver circuit 430-b for a second port (e.g., a second polarization). The first RF transceiver circuit 430-a may include first RF processing circuits for a plurality of antennas 440. The second RF transceiver circuit 430-b may include second RF processing circuits for the plurality of antennas 440. For example, the RF processing unit 1013 may include a front-end structure in which each antenna is connected to an RF processing circuit (e.g., one of RF processing circuits of the first RF transceiver circuit 430-a) for the first polarization and an RF processing circuit (e.g., one of RF processing circuits of the second RF transceiver circuit 430-b) for the second polarization. Each RF processing circuit may be referred to as an RF path as a unit of a path through which a signal received through an antenna or a signal radiated through an antenna passes. At least one RF path may be referred to as an RF chain. The RF chain may include a plurality of RF elements. The RF elements may include an amplifier, a mixer, an oscillator, a digital-to-analog converter (DAC), an analog-to-digital converter (ADC), and the like. For example, the RF processing unit 1013 may include an up converter for up-converting a digital transmission signal of a baseband to a transmission frequency and a DAC for converting the up-converted digital transmission signal into an analog RF transmission signal. The up converter and the DAC form a portion of a transmission path. The transmission path may further include a power amplifier (PA) or a coupler (or a combiner). Also, for example, the RF processing unit 1013 may include an ADC for converting an analog RF reception signal into a digital reception signal and a down converter for converting the digital reception signal into a digital reception signal of a baseband. The ADC and the down converter form a portion of a reception path. The reception path may further include a low-noise amplifier (LNA) or a coupler (or a divider). RF components of the RF processing unit may be implemented on the PCB. For example, the electronic device 1010 may include a structure in which the antenna unit 1011, the filter unit 1012, and the RF processing unit 1013 are stacked in order. For example, the antennas and the RF components of the RF processing unit may be implemented on the PCB. For example, filters may be repeatedly coupled between PCBs to form a plurality of layers.

The RF processing unit 1013 may include a plurality of RF processing chains for a plurality of signal paths delivered to the antenna unit 1011 and the filter unit 1012. For example, the RF processing unit 1013 may be an RFIC. The RFIC may include a plurality of RF processing chains. A signal applied in the baseband may be input to the RFIC. The signal input to the RFIC may be distributed to each antenna element. At this time, for beamforming, an independent phase shift may be applied to each of the antenna elements. Accordingly, the RFIC may include RF processing chains for processing of the signal to be delivered to each antenna element. Each RF processing chain may include one or more RF components for RF signal processing.

The processor 1014 may control overall operations of the electronic device 1010. The processor 1014 may include various modules for performing communication. The processor 1014 may include at least one processor such as a modem. The processor 1014 may include modules for digital signal processing. For example, the processor 1014 may include the modem. When transmitting data, the processor 1014 generates complex symbols by encoding and modulating a transmission bit stream. Also, for example, when receiving data, the processor 1014 restores a reception bit stream through demodulation and decoding of a baseband signal. The processor 1014 may perform functions of a protocol stack required in a communication standard. According to an embodiment, the processor 1014 may include a DPD circuit 210. The processor 1014 may include the DPD circuit 210 as a component of a digital front end (DFE). The processor 1014 may include a control circuit 380 for controlling the DPD circuit 210. The processor 1014 may be configured to determine control parameters (e.g., DPD coefficients of each DPD unit) for the DPD circuit 210. The processor 1014 may be configured to output a predicted reception signal through machine learning. For example, the processor 1014 may be configured to obtain reception signals from reception paths (e.g., reception paths of RF processing circuits for a polarization different from a polarization of a transmission signal) of the RF processing unit 1013. The processor 1014 may be configured to output the predicted reception signal through machine learning using the reception signals.

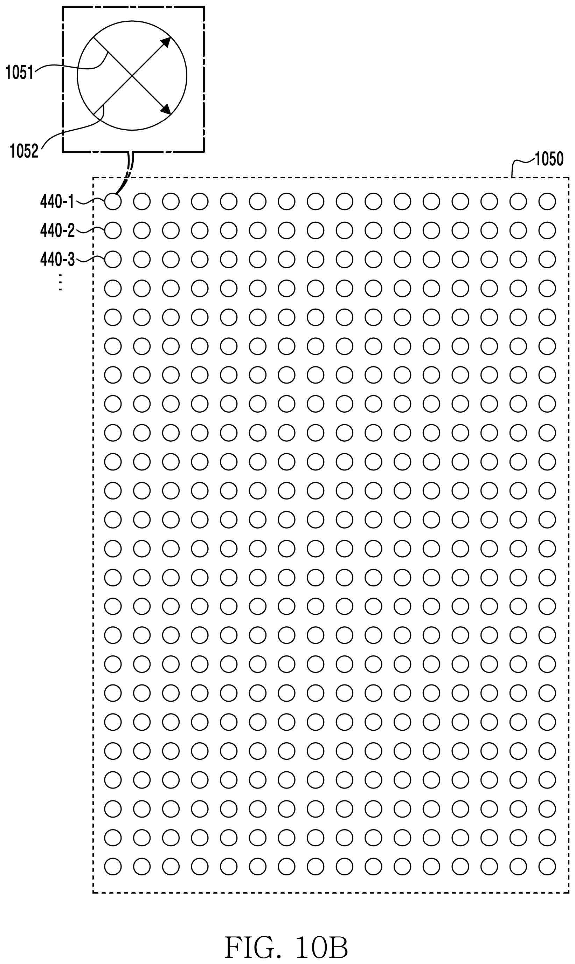

FIG. 10B illustrates an example of an array antenna. The array antenna illustrates the antenna unit 1011 of the electronic device 101 of FIG. 10A.

Referring to FIG. 10A, the electronic device 1010 may include an array antenna 1050. The array antenna 1050 may include a plurality of antenna elements. The array antenna 1050 may include antenna elements arranged in a two-dimensional manner. For example, the array antenna may include a total of 384 antenna elements, in which 16 antenna elements are disposed in a horizontal direction and 24 antenna elements are disposed in a vertical direction. Each antenna element (e.g., a first antenna 440-1, a second antenna 440-2, a third antenna 440-3) may support two polarizations. Unlike a structure in which a radiator supporting a first polarization 1051 and a radiator supporting a second polarization 1052 are implemented independently, the electronic device 1010 may support both the first polarization 1051 and the second polarization 1052 through a radiator. For example, in the electronic device 1010, an RF transceiver circuit (e.g., a first RF transceiver circuit 430-a) for the first polarization 1051 and an RF transceiver circuit (e.g., a second RF transceiver circuit 430-b) for the second polarization 1052 may be connected to the same radiator. The antenna element may be configured to transmit and/or receive signals of the first polarization 1051 or to transmit and/or receive signals of the second polarization 1052.

In embodiments, an electronic device is provided. The electronic device may comprise a digital pre-distortion (DPD) circuit, a first radio frequency (RF) transceiver circuit for a first polarization, a second RF transceiver circuit for a second polarization, a plurality of antennas including a first antenna and a second antenna, and a control circuit. The first RF transceiver circuit may include a plurality of first RF processing circuits for the plurality of antennas. The second RF transceiver circuit may include a plurality of second RF processing circuits for the plurality of antennas. The control circuit may be configured to transmit a transmission signal through a transmission path connected to the first antenna among the plurality of first RF processing circuits. The control circuit may be configured to obtain a first reception signal corresponding to the transmission signal through a reception path connected to the first antenna among the plurality of second RF processing circuits. The control circuit may be configured to obtain a second reception signal corresponding to the transmission signal through a reception path connected to the second antenna among the plurality of second RF processing circuits. The control circuit may be configured to set the DPD circuit based on the transmission signal, the first reception signal, and the second reception signal.

According to an embodiment, the control circuit may be configured to deactivate power amplifiers of other transmission paths excluding the transmission path connected to the first antenna, among the plurality of first RF processing circuits while the transmission signal is transmitted through the first antenna. The control circuit may be configured to activate a low noise amplifier of the reception path connected to the first antenna among the plurality of second RF processing circuits to obtain the first reception signal. The control circuit may be configured to activate a low-noise amplifier of the reception path connected to the second antenna among the plurality of second RF processing circuits to obtain the second reception signal.

According to an embodiment, the control circuit may be configured to deactivate, while the low-noise amplifier of the reception path connected to the first antenna is activated, low-noise amplifiers of reception paths, different from the reception path connected to the first antenna, among the plurality of second RF processing circuits. The control circuit may be configured to deactivate, while the low-noise amplifier of the reception path connected to the second antenna is activated, low-noise amplifiers of reception paths, different from the reception path connected to the second antenna, among the plurality of second RF processing circuits.

According to an embodiment, each processing circuit of the plurality of first RF processing circuits and the plurality of second RF processing circuits may include a transmission path and a reception path. The transmission path may include a power amplifier. The reception path may include a low noise amplifier.

According to an embodiment, to set the DPD circuit, the control circuit may be configured to obtain a predicted output signal through a machine learning using the first reception signal and the second reception signal, and determine DPD coefficients for the DPD circuit based on the transmission signal and the prediction output signal.

According to an embodiment, the plurality of antennas may include a third antenna.

According to an embodiment, the control circuit may be configured to obtain a third reception signal through a reception path connected to the third antenna among the plurality of second RF processing circuits. The machine learning may use the first reception signal, the second reception signal, and the third reception signal as input data. A distance between the third antenna and the first antenna may be different from a distance between the second antenna and the first antenna.

According to an embodiment, the control circuit may be configured to obtain the transmission signal. The machine learning may use the first received signal, the second received signal, the third received signal, and the transmitted signal as input data.

According to an embodiment, the machine learning may use the first reception signal, the second reception signal, and feedback information as input data. The feedback information may indicate a reception signal corresponding to the transmission signal in an external electronic device.

According to an embodiment, the first reception signal may be input according to a first weight in the machine learning. The second reception signal may be input according to a second weight in the machine learning. The first weight may be set to be different from the second weight.

According to an embodiment, the plurality of antennas may be included in a cross-pole antenna array for the first polarization and the second polarization. The first polarization and the second polarization may be perpendicular to each other.

In embodiments, a method performed by an electronic device is provided. The method may comprise transmitting a transmission signal through a transmission path connected to a first antenna among a plurality of first radio frequency (RF) processing circuits for a plurality of antennas. The method may comprise obtaining a first reception signal corresponding to the transmission signal through a reception path connected to the first antenna among a plurality of second RF processing circuits for the plurality of antennas. The method may comprise obtaining a second reception signal corresponding to the transmission signal through a reception path connected to a second antenna among the plurality of second RF processing circuits. The method may comprise setting a digital pre-distortion (DPD) circuit based on the transmission signal, the first reception signal, and the second reception signal. The plurality of first RF processing circuits may be used for signals for a first polarization. The plurality of second RF processing circuits may be used for signals for a second polarization.

According to an embodiment, the method may comprise deactivating power amplifiers of other transmission paths, excluding the transmission path connected to the first antenna, among the plurality of first RF processing circuits while the transmission signal is transmitted through the first antenna. The method may comprise activating a low noise amplifier of the reception path connected to the first antenna among the plurality of second RF processing circuits to obtain the first reception signal. The method may comprise activating a low-noise amplifier of the reception path connected to the second antenna among the plurality of second RF processing circuits to obtain the second reception signal.

According to an embodiment, the method may comprise deactivating, while the low-noise amplifier of the reception path connected to the first antenna is activated, low-noise amplifiers of reception paths, different from the reception path connected to the first antenna, among the plurality of second RF processing circuits. The method may comprise deactivating, while the low-noise amplifier of the reception path connected to the second antenna is activated, low-noise amplifiers of reception paths, different from the reception path connected to the second antenna, among the plurality of second RF processing circuits.

According to an embodiment, each processing circuit of the plurality of first RF processing circuits and the plurality of second RF processing circuits may include a transmission path and a reception path. The transmission path may include a power amplifier. The reception path may include a low noise amplifier.

According to an embodiment, the setting of the DPD circuit may comprise obtaining a predicted output signal through a machine learning using the first reception signal and the second reception signal. The setting of the DPD circuit may comprise determining DPD coefficients for the DPD circuit based on the transmission signal and the prediction output signal.

According to an embodiment, the method may further comprise obtaining a third reception signal through a reception path connected to the third antenna among the plurality of second RF processing circuits. The machine learning may use the first reception signal, the second reception signal, and the third reception signal as input data. A distance between the third antenna and the first antenna may be different from a distance between the second antenna and the first antenna.

According to an embodiment, the method may further comprise obtaining the transmission signal. The machine learning may use the first reception signal, the second reception signal, the third reception signal, and the transmission signal as input data.

According to an embodiment, the machine learning may use the first reception signal, the second reception signal, and feedback information as input data. The feedback information may indicate a reception signal corresponding to the transmission signal in an external electronic device.

According to an embodiment, the first reception signal is input according to a first weight in the machine learning, the second reception signal is input according to a second weight in the machine learning, and the first weight is set to be different from the second weight.

According to an embodiment, the plurality of antennas may be included in a cross-pole antenna array for the first polarization and the second polarization. The first polarization and the second polarization may be perpendicular to each other.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore ), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An electronic device, comprising:
a digital pre-distortion (DPD) circuit;
a first radio frequency (RF) transceiver circuit for a first polarization;
a second RF transceiver circuit for a second polarization;
a plurality of antennas including a first antenna and a second antenna; and
a control circuit,
wherein the first RF transceiver circuit includes a plurality of first RF processing circuits for the plurality of antennas,
wherein the second RF transceiver circuit includes a plurality of second RF processing circuits for the plurality of antennas,
wherein the control circuit is configured to:
transmit a transmission signal through a transmission path connected to the first antenna among the plurality of first RF processing circuits,
obtain a first reception signal corresponding to the transmission signal through a reception path connected to the first antenna among the plurality of second RF processing circuits,
obtain a second reception signal corresponding to the transmission signal through a reception path connected to the second antenna among the plurality of second RF processing circuits, and
set the DPD circuit based on the transmission signal, the first reception signal, and the second reception signal.

2. The electronic device of claim 1,
wherein the control circuit is configured to:
deactivate power amplifiers of other transmission paths excluding the transmission path connected to the first antenna, among the plurality of first RF processing circuits while the transmission signal is transmitted through the first antenna,
activate a low noise amplifier of the reception path connected to the first antenna among the plurality of second RF processing circuits to obtain the first reception signal, and
activate a low-noise amplifier of the reception path connected to the second antenna among the plurality of second RF processing circuits to obtain the second reception signal.

3. The electronic device of claim 2, wherein the control circuit is configured to:
deactivate, while the low-noise amplifier of the reception path connected to the first antenna is activated, low-noise amplifiers of reception paths, different from the reception path connected to the first antenna, among the plurality of second RF processing circuits, and
deactivate, while the low-noise amplifier of the reception path connected to the second antenna is activated, low-noise amplifiers of reception paths, different from the reception path connected to the second antenna, among the plurality of second RF processing circuits.

4. The electronic device of claim 1,
wherein each processing circuit of the plurality of first RF processing circuits and the plurality of second RF processing circuits includes a transmission path and a reception path,
wherein the transmission path includes a power amplifier, and
wherein the reception path includes a low noise amplifier.

5. The electronic device of claim 1,
wherein, to set the DPD circuit, the control circuit is configured to:
obtain a predicted output signal through a machine learning using the first reception signal and the second reception signal, and
determine DPD coefficients for the DPD circuit based on the transmission signal and the prediction output signal.

6. The electronic device of claim 5,
wherein the plurality of antennas further includes a third antenna,
wherein the control circuit is configured to obtain a third reception signal through a reception path connected to the third antenna among the plurality of second RF processing circuits,
wherein the machine learning uses the first reception signal, the second reception signal, and the third reception signal as input data, and
wherein a distance between the third antenna and the first antenna is different from a distance between the second antenna and the first antenna.

7. The electronic device of claim 6,
wherein the control circuit is configured to obtain the transmission signal, and
wherein the machine learning uses the first received signal, the second received signal, the third received signal, and the transmitted signal as input data.

8. The electronic device of claim 5,
wherein the machine learning uses the first reception signal, the second reception signal, and feedback information as input data, and
wherein the feedback information indicates a reception signal corresponding to the transmission signal in an external electronic device.

9. The electronic device of claim 5,
wherein the first reception signal is input according to a first weight in the machine learning,
wherein the second reception signal is input according to a second weight in the machine learning, and
wherein the first weight is set to be different from the second weight.

10. The electronic device of claim 1,
wherein the plurality of antennas are included in a cross-pole antenna array for the first polarization and the second polarization, and
wherein the first polarization and the second polarization are perpendicular to each other.

11. A method performed by an electronic device, comprising:
transmitting a transmission signal through a transmission path connected to a first antenna among a plurality of first radio frequency (RF) processing circuits for a plurality of antennas;
obtaining a first reception signal corresponding to the transmission signal through a reception path connected to the first antenna among a plurality of second RF processing circuits for the plurality of antennas;
obtaining a second reception signal corresponding to the transmission signal through a reception path connected to a second antenna among the plurality of second RF processing circuits; and
setting a digital pre-distortion (DPD) circuit based on the transmission signal, the first reception signal, and the second reception signal,
wherein the plurality of first RF processing circuits is used for signals for a first polarization, and
wherein the plurality of second RF processing circuits is used for signals for a second polarization.

12. The method of claim 11, further comprising:
deactivating power amplifiers of other transmission paths, excluding the transmission path connected to the first antenna, among the plurality of first RF processing circuits while the transmission signal is transmitted through the first antenna,
activating a low noise amplifier of the reception path connected to the first antenna among the plurality of second RF processing circuits to obtain the first reception signal, and
activating a low-noise amplifier of the reception path connected to the second antenna among the plurality of second RF processing circuits to obtain the second reception signal.

13. The method of claim 12, further comprising:
deactivating, while the low-noise amplifier of the reception path connected to the first antenna is activated, low-noise amplifiers of reception paths, different from the reception path connected to the first antenna, among the plurality of second RF processing circuits, and
deactivating, while the low-noise amplifier of the reception path connected to the second antenna is activated, low-noise amplifiers of reception paths, different from the reception path connected to the second antenna, among the plurality of second RF processing circuits.

14. The method of claim 11,
wherein each processing circuit of the plurality of first RF processing circuits and the plurality of second RF processing circuits includes a transmission path and a reception path,
wherein the transmission path includes a power amplifier, and
wherein the reception path includes a low noise amplifier.

15. The method of claim 11,
wherein the setting of the DPD circuit comprises:
obtaining a predicted output signal through a machine learning using the first reception signal and the second reception signal, and
determining DPD coefficients for the DPD circuit based on the transmission signal and the prediction output signal.
